(19) Europäisches Patentamt
European Patent Office
Office européen des brevets

(11) EP 4 628 378 A1

(12) **EUROPEAN PATENT APPLICATION**
published in accordance with Art. 153(4) EPC

(43) Date of publication:
08.10.2025 Bulletin 2025/41

(51) International Patent Classification (IPC):
**B60W 30/00** (2006.01)

(21) Application number: 23910310.4

(22) Date of filing: 21.12.2023

(52) Cooperative Patent Classification (CPC):
B60W 30/00; B60W 30/06; B60W 30/08;
B60W 30/09; B60W 30/095; B60W 60/00

(86) International application number:
PCT/CN2023/140469

(87) International publication number:
WO 2024/140381 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.12.2022 CN 202211708549

(71) Applicant: Shenzhen Yinwang Intelligent
Technologies Co., Ltd.
Shenzhen, Guangdong 518110 (CN)

(72) Inventors:
• ZHANG, Jiaxu
Shenzhen, Guangdong 518129 (CN)
• WANG, Xinyu
Shenzhen, Guangdong 518129 (CN)
• ZHANG, Yu
Shenzhen, Guangdong 518129 (CN)

(74) Representative: MERH-IP Matias Erny Reichl
Hoffmann
Patentanwälte PartG mbB
Paul-Heyse-Straße 29
80336 München (DE)

(54) **AUTOMATIC PARKING METHOD, APPARATUS AND INTELLIGENT DRIVING DEVICE**

(57) An auto parking method and apparatus, and an intelligent driving device are provided. The method includes: obtaining a first path remaining distance, where the first path remaining distance includes a distance between an intelligent driving device and an end point of a planned parking path along the planned parking path; determining a first speed limit based on the first path remaining distance; determining a second speed limit based on first obstacle distance information, where the first obstacle distance information includes a distance between the intelligent driving device and a surrounding obstacle; and determining a parking speed of the intelligent driving device based on the first speed limit and the second speed limit. This application may be applied to an intelligent vehicle or an electric vehicle, so that impact of a path remaining distance and an obstacle distance on a parking speed can be taken into consideration in a process of planning the parking speed. In this way, the parking speed in auto parking can be closer to a parking speed in a manual parking scenario, and user experience for an auto parking function can be improved.

500

| Obtain a first path remaining distance | S510 |
| Determine a first speed limit based on the first path remaining distance | S520 |
| Determine a second speed limit based on first obstacle distance information | S530 |
| Determine a parking speed of an intelligent driving device based on the first speed limit and the second speed limit | S540 |

FIG. 5

EP 4 628 378 A1

**Description**

This application claims priority to Chinese Patent Application No. 202211708549.7, filed with the China National Intellectual Property Administration on December 29, 2022 and entitled "AUTO PARKING METHOD AND APPARATUS, AND INTELLIGENT DRIVING DEVICE", which is incorporated herein by reference in its entirety.

**TECHNICAL FIELD**

Embodiments of this application relate to the field of intelligent driving, and more specifically, to an auto parking method and apparatus, and an intelligent driving device.

**BACKGROUND**

With rapid development of the vehicle industry, many assisted driving and automatic driving technologies such as an auto parking technology are generated, to reduce driving pressure, and improve safety and convenience. In a current technical background, a movement state of a vehicle in a process in which the vehicle is automatically parked into a parking space by using an auto parking technology is greatly different from a movement state of the vehicle in a manual parking process. Parking the vehicle into the parking space by using the auto parking technology may affect parking experience and even personal safety of people inside and outside the vehicle.

In view of this, there is an urgent need to develop an auto parking solution that can improve parking experience.

**SUMMARY**

Embodiments of this application provide an auto parking method and apparatus, and an intelligent driving device. A parking speed is planned, so that a movement state of the intelligent driving device in an auto parking process can be more similar to that in a manual parking scenario, and auto parking experience can be improved.

According to a first aspect, an auto parking method is provided. The method may be performed by an intelligent driving device, or may be performed by a terminal like a computing platform in the intelligent driving device, or may be performed by a chip or a circuit in the intelligent driving device. This is not limited in embodiments of this application.

For example, the intelligent driving device may be a vehicle.

The method may include: obtaining a first path remaining distance, where the first path remaining distance includes a distance between the intelligent driving device and an end point of a planned parking path along the planned parking path; determining a first speed limit based on the first path remaining distance; determining a second speed limit based on first obstacle distance information, where the first obstacle distance information includes a distance between the intelligent driving device and a surrounding obstacle; and determining a parking speed of the intelligent driving device based on the first speed limit and the second speed limit.

In this application, the first speed limit and the second speed limit are separately determined based on the path remaining distance and the obstacle distance information, and the parking speed of the intelligent driving device is determined accordingly. In this way, impact of the path remaining distance and an obstacle distance on the parking speed can be taken into consideration in a process of planning the parking speed. In this way, the parking speed in auto parking can be closer to a parking speed in a manual parking scenario, and user experience for an auto parking function can be improved.

With reference to the first aspect, in some implementations of the first aspect, the determining a first speed limit based on the first path remaining distance may include: determining a path remaining distance between each path point in a plurality of path points of the planned parking path within the first path remaining distance and the end point of the planned parking path based on the plurality of path points; and determining, based on the path remaining distance between each path point and the end point of the planned parking path, a first speed limit corresponding to each path point. The determining a second speed limit based on first obstacle distance information may include: determining, based on obstacle distance information corresponding to each path point, a second speed limit corresponding to each path point. The determining a parking speed of the intelligent driving device based on the first speed limit and the second speed limit may include: determining a parking speed at each path point based on the first speed limit corresponding to each path point and the second speed limit corresponding to each path point.

In this application, the first speed limit and the second speed limit that correspond to each path point in the plurality of path points within the first path remaining distance are determined, so that the parking speed at each path point can be planned, and a speed on a remaining planned parking path can be planned, the planned parking speed can be more stable, and timeliness of the planned parking speed can be improved.

With reference to the first aspect, in some implementations of the first aspect, the plurality of path points include a first path point and a second path point. The second path point is a path point within a pre-targeting distance from the first path point. The determining, based on obstacle distance information corresponding to each path point, a second speed limit corresponding to each path point may include: determining an obstacle speed limit of the first path point based on an obstacle distance corresponding to the first path point; determining an obstacle speed limit of the second path point based on an obstacle distance corresponding to the second path point; and determining, based on the obstacle speed limit of the first path point and the obstacle speed limit of the second path point, a second speed limit corresponding to the first path point.

In this application, a pre-targeting feature is taken into consideration, so that the second speed limit can be adjusted in advance based on a second speed limit of a path point within the pre-targeting distance, and fluctuation of the planned parking speed at a plurality of path points within the pre-targeting distance can be reduced. In this way, the parking speed planned based on the second speed limit can be closer to that in the manual parking scenario.

With reference to the first aspect, in some implementations of the first aspect, the determining, based on the obstacle speed limit of the first path point and the obstacle speed limit of the second path point, a second speed limit corresponding to the first path point may include: determining a smaller value between the obstacle speed limit of the first path point and the obstacle speed limit of the second path point as the second speed limit corresponding to the first path point.

In this application, the smaller value between the obstacle speed limit of the first path point and the obstacle speed limit of the second path point is determined as the second speed limit corresponding to the first path point, so that when the obstacle speed limit of the second path point is less than the obstacle speed limit of the first path point, the second speed limit can be decelerated in advance within the pre-targeting distance. In this way, the parking speed planned based on the second speed limit can be closer to that in the manual parking scenario.

With reference to the first aspect, in some implementations of the first aspect, the method may further include: determining a historical second speed limit of each path point based on the second speed limit of each path point. The determining a parking speed of the intelligent driving device based on the first speed limit and the second speed limit may include: planning the parking speed of the intelligent driving device based on the historical second speed limit of each path point and the first speed limit of each path point.

In this application, the parking speed is planned based on the historical second speed limit of each path point, so that a short-time speed constraint change formed by the first speed limit and the second speed limit can be suppressed, and coupling disturbance of the parking speed caused by the first speed limit and the second speed limit can be suppressed.

With reference to the first aspect, in some implementations of the first aspect, the planned parking path includes a first path interval, a second path interval, and a third path interval within the first path remaining distance, the third path interval includes a first intersection point of a first curve and a second curve, the first curve is a curve formed based on the first speed limit of each path point, and the second curve is a curve formed based on the second speed limit of each path point. A difference between a path remaining distance of the third path interval and a path remaining distance of the first intersection point is less than or equal to a preset value, a path remaining distance of the first path interval is greater than the path remaining distance of the first intersection point, a first speed limit of the first path interval is greater than the second speed limit, a path remaining distance of the second path interval is less than the path remaining distance of the first intersection point, and the first speed limit of the second path interval is less than the second speed limit. The determining a parking speed at each path point based on the first speed limit corresponding to each path point and the second speed limit corresponding to each path point may include: determining third curves within the first path interval and the second path interval based on smallest values in the first curve and the second curve within the first path interval and the second path interval; and when a time history of a speed limit of the first intersection point is greater than or equal to a first threshold, determining a third curve within the third path interval based on a smallest value in the first curve and the second curve within the third path interval; or when a time history of a speed limit of the first intersection point is less than a first threshold, determining a third curve within the third path interval based on a second speed limit corresponding to a first dividing point and a first speed limit corresponding to a second dividing point, where the first dividing point is a dividing point between the first path interval and the third path interval, the second dividing point is a dividing point between the second path interval and the third path interval, and the third curve indicates the parking speed at each path point.

In this application, different path intervals are obtained through division, so that segmentation processing can be performed on the different path intervals based on the time history of the speed limit of the first curve and the second curve at the first intersection point of the first curve and the second curve, to suppress a short-time speed constraint change formed by the first speed limit and the second speed limit at the first intersection point, and suppress coupling disturbance of the parking speed caused by the first speed limit and the second speed limit.

With reference to the first aspect, in some implementations of the first aspect, the method may further include: determining a first reference speed based on the first path remaining distance and a current speed of the intelligent driving device. The determining a parking speed of the intelligent driving device based on the first speed limit and the second speed limit may include: determining the parking speed of the intelligent driving device based on the first speed limit, the second speed limit, and the first reference speed.

In this application, the first reference speed is determined, so that parking speeds determined in different calculation cycles can have high consistency, and a large deviation of parking speeds at a same path point caused by vehicle movement in the different calculation cycles can be avoided.

With reference to the first aspect, in some implementations of the first aspect, the method may further include: determining an actual parking path of the intelligent driving device based on a movement state parameter of the intelligent driving device and the planned parking path; and determining, based on the actual parking path, whether the intelligent driving device has a collision risk.

In this application, an actual parking process of the intelligent driving device is tracked, to predict whether there is a collision risk, so that timely intervention can be performed when there is a collision risk, thereby improving safety performance of auto parking.

With reference to the first aspect, in some implementations of the first aspect, the method may further include: determining a braking distance when determining that the intelligent driving device has a collision risk; and controlling, based on the braking distance, the intelligent driving device to brake.

In this application, when it is determined that there is the collision risk, the intelligent driving device is controlled to brake, so that vehicle and personal safety can be ensured.

With reference to the first aspect, in some implementations of the first aspect, the method may further include: determining the first path remaining distance based on the planned parking path and a projection of a first feature point of the intelligent driving device on the planned parking path, where the first feature point is used to construct an intelligent driving device coordinate system of the intelligent driving device.

In the actual parking process of the intelligent driving device, there may be a deviation between the actual parking path of the intelligent driving device and the planned parking path. In this application, the first path remaining distance is determined based on the projection of the first feature point on the planned parking path, so that adaptability of the method to the planned parking path can be improved, and a case in which the actual parking path cannot completely match the planned parking path and consequently cannot be applied can be avoided.

With reference to the first aspect, in some implementations of the first aspect, the method may further include: determining an obstacle on a side of the intelligent driving device; and determining the first obstacle distance information based on the obstacle on the side of the intelligent driving device.

In this application, the first obstacle distance information is determined based on the obstacle on the side of the intelligent driving device, so that resources required for determining the first obstacle distance information can be reduced, and timeliness of planning a parking speed can be improved.

According to a second aspect, an auto parking apparatus is provided. The apparatus may include: an obtaining unit, configured to obtain a first path remaining distance, where the first path remaining distance includes a distance between an intelligent driving device and an end point of a planned parking path along the planned parking path; and a processing unit, configured to: determine a first speed limit based on the first path remaining distance; determine a second speed limit based on first obstacle distance information, where the first obstacle distance information includes a distance between the intelligent driving device and a surrounding obstacle; and determine a parking speed of the intelligent driving device based on the first speed limit and the second speed limit.

With reference to the second aspect, in some implementations of the second aspect, the processing unit may be configured to: determine a path remaining distance between each path point in a plurality of path points of the planned parking path within the first path remaining distance and the end point of the planned parking path based on the plurality of path points; determine, based on the path remaining distance between each path point and the end point of the planned parking path, a first speed limit corresponding to each path point; determine, based on obstacle distance information corresponding to each path point, a second speed limit corresponding to each path point; and determine a parking speed at each path point based on the first speed limit corresponding to each path point and the second speed limit corresponding to each path point.

With reference to the second aspect, in some implementations of the second aspect, the plurality of path points include a first path point and a second path point. The second path point is a path point within a pre-targeting distance from the first path point. The processing unit may be configured to: determine an obstacle speed limit of the first path point based on an obstacle distance corresponding to the first path point; determine an obstacle speed limit of the second path point based on an obstacle distance corresponding to the second path point; and determine, based on the obstacle speed limit of the first path point and the obstacle speed limit of the second path point, a second speed limit corresponding to the first path point.

With reference to the second aspect, in some implementations of the second aspect, the processing unit may be configured to determine a smaller value between the obstacle speed limit of the first path point and the obstacle speed limit of the second path point as the second speed limit corresponding to the first path point.

With reference to the second aspect, in some implementations of the second aspect, the planned parking path includes a first path interval, a second path interval, and a third path interval within the first path remaining distance, the third path interval includes a first intersection point of a first curve and a second curve, the first curve is a curve formed based on the first speed limit of each path point, and the second curve is a curve formed based on the second speed limit of each path point. A difference between a path remaining distance of the third path interval and a path remaining distance of the first intersection point is less than or equal to a preset value, a path remaining distance of the first path interval is greater than the path remaining distance of the first intersection point, a first speed limit of the first path interval is greater than the second speed limit, a path remaining distance of the second path interval is less than the path remaining distance of the first intersection point, and the first speed limit of the second path interval is less than the second speed limit. The processing unit may be configured to: determine third curves within the first path interval and the second path interval based on smallest values in the first curve and the second curve within the first path interval and the second path interval; and when a time history of a speed limit of the first intersection point is greater than or equal to a first threshold, determine a third curve within the third path interval based on a smallest value in the first curve and the second curve within the third path interval; or when a time history of a speed limit of the first intersection point is less than a first threshold, determine a third curve within the third path interval based on a second speed limit corresponding to a first dividing point and a first speed limit corresponding to a second dividing point, where the first dividing point is a dividing point between the first path interval and the third path interval, the second dividing point is a dividing point between the second path interval and the third path interval, and the third curve indicates the parking speed at each path point.

With reference to the second aspect, in some implementations of the second aspect, the processing unit may be further configured to determine a first reference speed based on the first path remaining distance and a current speed of the intelligent driving device. The processing unit may be configured to determine the parking speed of the intelligent driving device based on the first speed limit, the second speed limit, and the first reference speed.

With reference to the second aspect, in some implementations of the second aspect, the processing unit may be further configured to: determine an actual parking path of the intelligent driving device based on a movement state parameter of the intelligent driving device and the planned parking path; and determine, based on the actual parking path, whether the intelligent driving device has a collision risk.

With reference to the second aspect, in some implementations of the second aspect, the processing unit may be further configured to: determine a braking distance when determining that the intelligent driving device has a collision risk; and control, based on the braking distance, the intelligent driving device to brake.

With reference to the second aspect, in some implementations of the second aspect, the processing unit may be further configured to determine the first path remaining distance based on the planned parking path and a projection of a first feature point of the intelligent driving device on the planned parking path, where the first feature point is used to construct an intelligent driving device coordinate system of the intelligent driving device.

With reference to the second aspect, in some implementations of the second aspect, the processing unit may be further configured to: determine an obstacle on a side of the intelligent driving device; and determine the first obstacle distance information based on the obstacle on the side of the intelligent driving device.

According to a third aspect, an auto parking apparatus is provided. The apparatus includes: a memory, configured to store a computer program; and a processor, configured to execute the computer program stored in the memory, to enable the apparatus to perform the method according to any one of the first aspect and the possible implementations of the first aspect.

According to a fourth aspect, an intelligent driving device is provided. The intelligent driving device includes the apparatus according to any one of the second aspect or the third aspect and the possible implementations of the second aspect or the third aspect.

According to a fifth aspect, a computer program product is provided. The computer program product includes computer program code. When the computer program code is run on a computer, the computer is enabled to perform the method according to any possible implementation of the first aspect.

According to a sixth aspect, a computer-readable storage medium is provided. The computer-readable medium stores a computer program. When the computer program is run on a computer, the computer is enabled to perform the method according to any possible implementation of the first aspect.

According to a seventh aspect, a chip is provided. The chip includes a circuit, configured to perform the method according to any possible implementation of the first aspect.

## BRIEF DESCRIPTION OF DRAWINGS

FIG. 1 is a functional block diagram of an intelligent driving device according to an embodiment of this application;
FIG. 2 is a diagram of a parking scenario according to an embodiment of this application;
FIG. 3 is a diagram of another parking scenario according to an embodiment of this application;
FIG. 4 is a diagram of a system architecture according to an embodiment of this application;
FIG. 5 is a schematic flowchart of an auto parking method according to an embodiment of this application;

FIG. 6 is a diagram of a method for determining a path remaining distance according to an embodiment of this application;

FIG. 7 is a diagram of a method for determining an obstacle distance according to an embodiment of this application;

FIG. 8 is a diagram of a method for determining an obstacle-distance speed limit according to an embodiment of this application;

FIG. 9 is a diagram of a pre-targeting method according to an embodiment of this application;

FIG. 10 is a diagram of another method for determining a vehicle speed limit according to an embodiment of this application;

FIG. 11 is a schematic flowchart of a pre-targeting operation according to an embodiment of this application;

FIG. 12 is a diagram of a pre-targeting operation according to an embodiment of this application;

FIG. 13(a) to FIG. 13(d) are diagrams of scenarios of determining a vehicle speed limit according to an embodiment of this application;

FIG. 14 is a diagram of a manner of updating a vehicle speed limit according to an embodiment of this application;

FIG. 15 is a schematic flowchart of a vehicle speed optimization method according to an embodiment of this application;

FIG. 16 is a schematic flowchart of another vehicle speed optimization method according to an embodiment of this application;

FIG. 17 is a diagram of a vehicle speed optimization method according to an embodiment of this application;

FIG. 18 is a block diagram of an auto parking apparatus according to an embodiment of this application; and

FIG. 19 is a block diagram of another auto parking apparatus according to an embodiment of this application.

## DESCRIPTION OF EMBODIMENTS

The following describes technical solutions of embodiments in this application with reference to accompanying drawings.

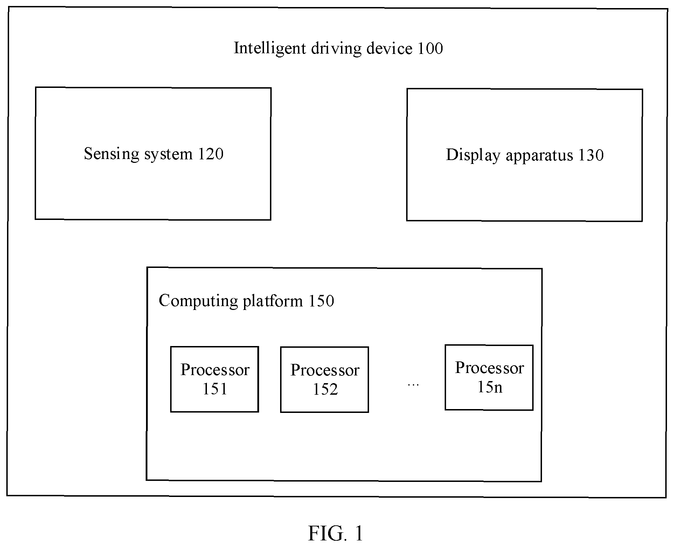

FIG. 1 is a functional block diagram of an intelligent driving device 100 according to an embodiment of this application. The intelligent driving device 100 may include a sensing system 120, a display apparatus 130, and a computing platform 150. The sensing system 120 may include one or more sensors that sense ambient environment information of the intelligent driving device 100. For example, the sensing system 120 may include a positioning system. The positioning system may be a global positioning system (global positioning system, GPS), a BeiDou system, or another positioning system. The sensing system 120 may alternatively include one or more of an inertial measurement unit (inertial measurement unit, IMU), a lidar, a millimeter-wave radar, an ultrasonic radar, and a camera apparatus.

Some or all functions of the intelligent driving device 100 may be controlled by the computing platform 150. The computing platform 150 may include one or more processors, for example, processors 151 to 15n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory, to implement a corresponding function.

The intelligent driving device 100 in this application may include a transportation tool on a road, a transportation tool on water, an air transportation tool, an industrial device, an agricultural device, an entertainment device, or the like. For example, the intelligent driving device 100 may be a vehicle. The vehicle is a vehicle in a broad sense, and may be a transportation tool (for example, a commercial vehicle, a passenger vehicle, a motorcycle, an airborne vehicle, or a train), an industrial vehicle (for example, a forklift truck, a trailer, or a tractor), an engineering vehicle (for example, an excavator, a bulldozer, or a crane), an agricultural device (for example, a lawn mower or a harvester), a recreational device, a toy vehicle, or the like. A type of the vehicle is not specifically limited in embodiments of this application. For another example, the intelligent driving device 100 may be a transportation tool like an airplane or a ship.

The intelligent driving device 100 may include an advanced driving assistant system (advanced driving assistant system, ADAS). The ADAS obtains information around the vehicle through a plurality of sensors (including but not limited to a lidar, a millimeter-wave radar, a camera apparatus, an ultrasonic sensor, a global positioning system, and an inertial measurement unit) on the intelligent driving device, and analyzes and processes the obtained information, to implement functions such as obstacle sensing, target recognition, vehicle positioning, path planning, and driver monitoring/reminder. This improves driving safety, automation, and comfort.

In terms of logical functions, the ADAS system generally includes three main functional modules: a sensing module, a decision-making module, and an execution module. The sensing module senses an ambient environment of a vehicle body through the sensor, and inputs corresponding real-time data to a processing center at a decision-making layer, and the sensing module mainly includes a vehicle-mounted camera, an ultrasonic radar, a millimeter-wave radar, a lidar, or the like. The decision-making module makes a corresponding decision by using a computing apparatus and an algorithm based on information obtained by the sensing module. After receiving a decision-making signal from the decision-making module, the execution module takes a corresponding action, for example, driving, changing a lane, steering, braking, or warning.

Under different autonomous driving levels (L0 to L5), the ADAS can implement autonomous driving assistance at different levels according to an artificial intelligence algorithm and the information obtained by the plurality of sensors. For example, the foregoing autonomous driving levels (L0 to L5) may be based on a grading standard of the society of automotive engineers (society of automotive engineers, SAE). The level L0 indicates no automation, a level L1 indicates driving assistance, a level L2 indicates partial automation, a level L3 indicates conditional automation, a level L4 indicates high automation, and the level L5 indicates full automation. Tasks of monitoring and responding to road conditions at levels L1 to L3 are jointly completed by a driver and a system, and the driver needs to take over a dynamic driving task. Levels L4 and L5 enable the driver to be completely transformed into a passenger. Currently, functions that can be implemented by the ADAS mainly include but are not limited to adaptive cruise, auto emergency braking, auto parking, blind spot monitoring, traffic warning/braking at front crossroads, traffic warning/braking at rear crossroads, preceding vehicle collision warning, lane departure warning, lane keeping assistance, trailing vehicle anti-collision warning, traffic sign recognition, traffic jam assistance, highway assistance, and the like. It should be understood that the foregoing functions may have specific modes at the different autonomous driving levels (L0 to L5). A higher autonomous driving level corresponds to a more intelligent mode. For example, auto parking may include auto parking assist (auto parking assist, APA), remote parking assist (remote parking assist, RPA), and auto valet parking (auto valet parking, AVP). For the APA, the driver does not need to control a steering wheel, but still needs to control a throttle and a brake on the vehicle. For the RPA, the driver may remotely park the vehicle outside the vehicle by using a terminal (for example, a mobile phone). For the AVP, the vehicle may complete parking without the driver. From a perspective of a corresponding autonomous driving level, the APA is approximately at the level L1, the RPA is approximately at the level L2 or L3, and the AVP is approximately at the level L4.

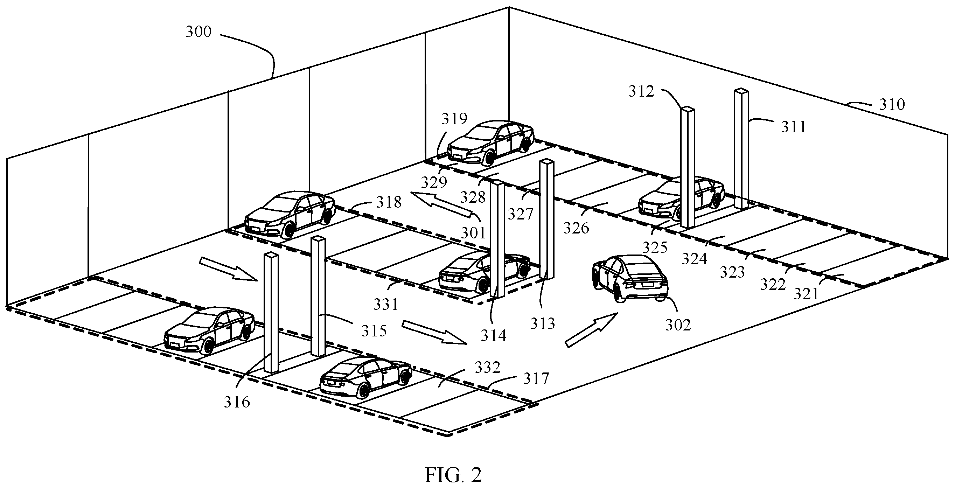

For example, FIG. 2 is a diagram of a parking scenario according to an embodiment of this application. As shown in FIG. 2, a parking lot 300 includes an idle parking space (for example, a parking space 321 to a parking space 324, and a parking space 326 to a parking space 328), or may include a non-idle parking space (for example, a parking space 325 and a parking space 329). The idle parking space and/or the non-idle parking space may belong to one or more parking areas. For example, the parking space 322 may belong to a parking area 317, and a parking space 331 may belong to a parking area 318, the parking space 321 to the parking space 329 may belong to a parking area 319. As shown in FIG. 2, building structures 311 to 316 may be columns of the parking lot, and a building structure 310 may be a wall of the parking lot. After traveling into the parking lot 300, a vehicle 302 may travel along an indication mark 301, and determine a parking area and a parking space based on ambient environment information obtained by a sensor of the vehicle 302. Further, an idle parking space may be selected from the parking lot for parking.

It should be understood that the parking scenario shown in FIG. 2 is merely an example, and the parking space in the parking scenario may alternatively be a vertical parking space and/or an oblique parking space. This is not limited in embodiments of this application.

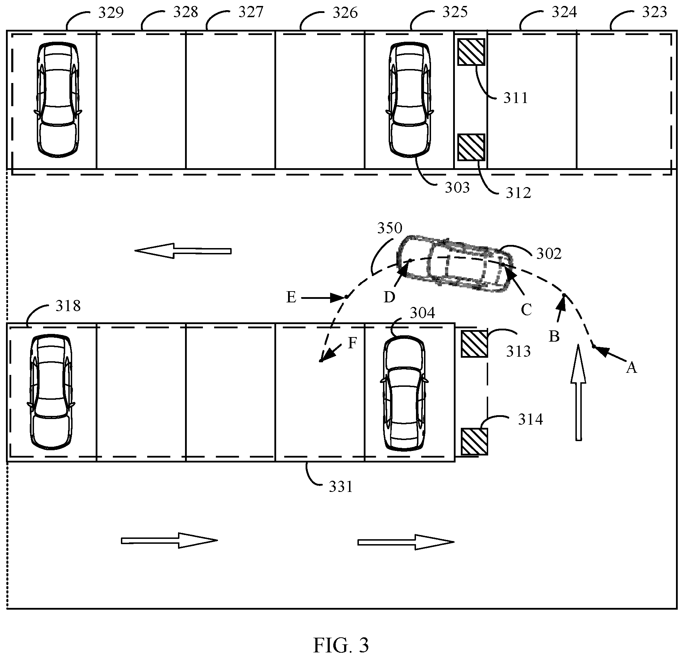

For example, FIG. 3 is a diagram of another parking scenario according to an embodiment of this application. Elements in FIG. 3 that have same or similar functions as those in FIG. 2 use the same numbers as those in FIG. 2. Alternatively, it may be understood that FIG. 3 shows a top view of some areas in the parking scenario shown in FIG. 2.

As shown in FIG. 3, the vehicle 302 may be parked, by using an auto parking function, in the idle parking space 331 based on a planned path 350 for auto parking. A point A to a point F may be planned path points for auto parking, and a planned path (for example, the path 350) for auto parking may be determined based on the plurality of path points. In the auto parking scenario, the point A may be understood as a start point of the planned path, and is referred to as a path start point for short; and a point B may be understood as an end point of the planned path, and is referred to as a path end point for short.

A parking process in a manual driving scenario is used as an example. In a parking process in which the vehicle 302 travels from a current location to the parking space 326, a distance between the vehicle and a surrounding obstacle like a column 312, a column 313, a vehicle 304, or a vehicle 303 located in the parking space 325 may affect a speed of the vehicle controlled by a driver. For example, when the distance between the vehicle and the surrounding obstacle is large, the driver may control the vehicle to travel at a high speed. When the distance between the vehicle and the surrounding obstacle is small, the driver controls the vehicle to travel at a low speed. For another example, when the vehicle passes through a channel formed by the column 312 and the column 313, a vehicle speed of the vehicle may be in a specific linear relationship with a width of the channel. In some possible scenarios, the channel that the vehicle needs to pass through may alternatively be formed by another obstacle. For another example, when the distance between the vehicle and the surrounding obstacle on a short path changes, because the driver has a clear driving intent, the vehicle speed of the vehicle may not fluctuate sharply on the short path.

As described above, in a process in which the current auto parking system controls the vehicle to park into a parking space, a vehicle movement state (for example, a vehicle speed) planned by the auto parking system is greatly different from a vehicle movement state in a manual parking scenario. The vehicle movement state is an important factor that affects parking experience. Although the vehicle can be parked into the parking space by using the current auto parking system, this parking manner may cause a sharp fluctuation of a vehicle speed of the vehicle in a short time, and may cause the vehicle to travel into a narrow channel at a high speed. As a result, the vehicle may be braked too late, and people inside and outside the vehicle may worry that the vehicle may collide with an obstacle. All the foregoing causes poor auto parking experience.

**In** view of this, embodiments of this application provide an auto parking method and apparatus, and an intelligent driving device, so that an auto parking system, like an experienced driver, can plan a movement state of the intelligent driving device. In this way, a movement state of the vehicle in an auto parking process is more similar to that in a manual driving scenario, thereby improving auto parking experience.

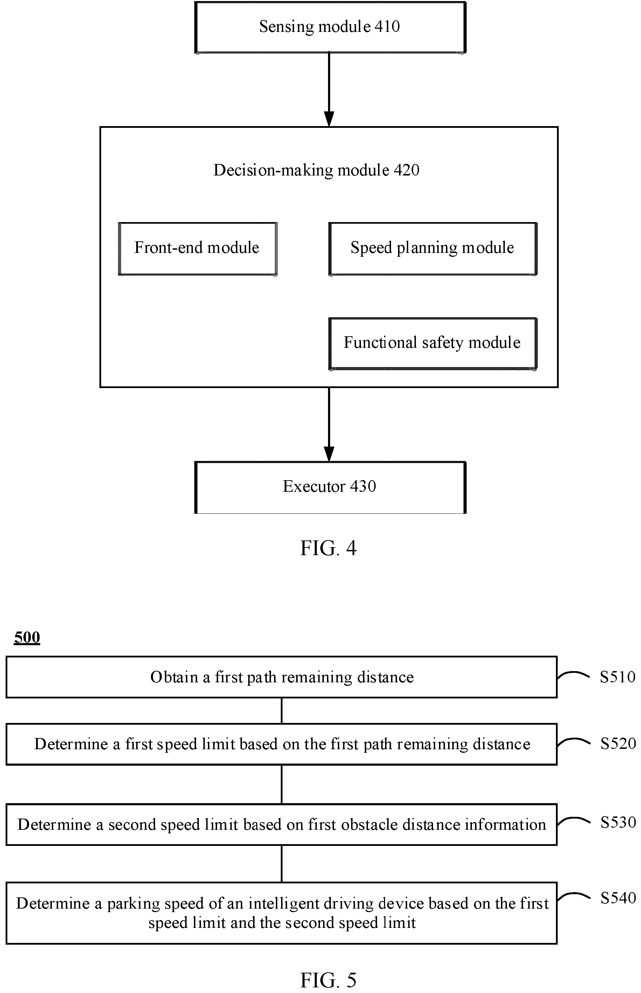

For example, FIG. 4 is a diagram of a system architecture according to an embodiment of this application. The system architecture 400 may include a sensing module, a decision-making module, and an executor. The sensing module may include one or more camera apparatuses or one or more radar sensors in the sensing system 120 shown in FIG. 1, and is configured to collect ambient information of a vehicle, for example, information about a parking area and information about an obstacle. The sensing module may further process the collected ambient environment information, and establish a world model including a road, an obstacle, and the like for a downstream module (for example, a decision-making module). The decision-making module may be one or more processors in the computing platform 150 shown in FIG. 1, or may be one or more processors in a cloud server associated with the intelligent driving device 100 shown in FIG. 1. The decision-making module may be configured to control the executor to act based on the ambient environment information obtained by the sensing module. The executor may control, based on control of the decision-making module, the vehicle to travel in a planned manner, to park into a planned area, or travel out of a current parking area. In some possible implementations, the executor may include a steering system, a braking system, a power system, and the like of the vehicle.

For example, the decision-making module may include a front-end module, a speed planning module, and a functional safety module. The front-end module, the speed planning module, and/or the functional safety module may be one or more processors in the computing platform 150 shown in FIG. 1, or may be one or more processors in the cloud server associated with the intelligent driving device 100 shown in FIG. 1. The front-end module may be configured to: determine a path remaining distance based on a planned parking path and a current location of the vehicle; and determine a distance between the vehicle and a surrounding obstacle based on the planned parking path and the current location of the vehicle. The speed planning module may determine a speed constraint condition based on the path remaining distance and the distance between the vehicle and the surrounding obstacle. Further, the speed planning module may plan a vehicle speed in a parking process based on the speed constraint condition. The functional safety module may predict a collision risk during parking based on the vehicle location and the planned parking path, to respond in a timely manner and ensure personal safety of personnel inside and outside the vehicle.

It should be understood that the foregoing modules are merely examples. In actual application, the foregoing modules may be added or deleted based on an actual requirement. For example, in some possible implementations, a speed constraint module and a speed optimization module may be used to replace the system architecture shown in FIG. 2. The speed constraint module may be configured to determine a speed constraint condition, for example, determine a speed limit of the vehicle. The speed optimization module may be configured to determine a highly consistent parking speed curve based on the speed constraint condition, for example, may optimize a parking speed based on a reference vehicle speed and the speed limit of the vehicle. For another example, in some possible implementations, the front-end module shown in FIG. 2 may be further divided into a path remaining distance determining module and an obstacle distance determining module, to separately determine a path remaining distance and an obstacle distance.

For example, FIG. 5 is a schematic flowchart of an auto parking method according to an embodiment of this application. The method 500 may be performed by an intelligent driving device (for example, a vehicle), or the method may be performed by the foregoing computing platform, vehicle-mounted terminal, or the like, or may be performed by a system-on-a-chip (system-on-a-chip, SOC) on a computing platform, or may be performed by a processor on a computing platform. The method 500 may include the following steps.

S510: Obtain a first path remaining distance.

For example, a path remaining distance may be a distance between a location and an end point of a planned parking path along the planned parking path, and the end point of the planned parking path may be used to indicate a target parking area. For example, a path remaining distance corresponding to a path point may be a distance between the path point and the end point of the path along the planned parking path, or may be referred to as a path remaining distance of the path point. For another example, the first path remaining distance may include a distance between the intelligent driving device and the end point of the planned parking path along the planned parking path, or may be a distance between a current location of the intelligent driving device and the end point of the path along the planned parking path.

For example, the following uses an example in which the intelligent driving device is a vehicle for description. Correspondingly, a first speed limit may alternatively be referred to as a first vehicle speed limit, a second speed limit may alternatively be referred to as a second vehicle speed limit, and a first reference speed may alternatively be referred to as a first reference vehicle speed.

S520: Determine the first speed limit based on the first path remaining distance.

For example, in a manual driving scenario, when there is no obstacle around the planned parking path, the vehicle is farther away from the target parking area, and a driver may control the vehicle to travel at a high speed. In a parking process, when the vehicle is close to the target parking area, the driver usually tends to control the vehicle to travel at a low speed.

For example, to improve auto parking and assisted parking experience, the first speed limit may be determined based on the first path remaining distance.

In an embodiment, the first speed limit of the vehicle at the current location may be determined based on the first path remaining distance.

In another embodiment, first speed limits corresponding to a plurality of path points of the planned parking path within the first path remaining distance may be determined based on the first path remaining distance. For example, 10 path points of the planned parking path within the first path remaining distance may be determined, path remaining distances of the 10 path points are separately determined, and first speed limits respectively corresponding to the 10 path points are determined accordingly.

In another embodiment, a correspondence between the first speed limit and the path remaining distance may be preset in a design phase of the vehicle or the computing platform 150 or before delivery, or may be determined based on a driving mode selected by the user, or may be generated based on historical operation information of the user on the vehicle. This is not limited in embodiments of this application.

S530: Determine a second speed limit based on first obstacle distance information.

For example, the first obstacle distance information may include a distance between the vehicle and a surrounding obstacle.

In an embodiment, the first obstacle distance information may include distances between the vehicle and a plurality of surrounding obstacles.

In another embodiment, the first obstacle distance information may include a minimum value of the distances between the vehicle and the plurality of surrounding obstacles.

In another embodiment, the first obstacle distance information may include obstacle distance information at the plurality of path points of the planned parking path within the first path remaining distance. For example, the planned parking path includes the 10 path points within the first path remaining distance, and the first obstacle distance information may include distances that are between the vehicle and surrounding obstacles and that are obtained when the vehicle is assumed to be separately at the 10 path points, that is, may include obstacle distance information corresponding to the 10 path points.

For example, the second speed limit may be determined based on the first obstacle distance information. For example, the corresponding second speed limit may be determined based on the obstacle distance information and a correspondence between the obstacle distance and a vehicle speed limit. As described above, in the manual driving scenario, when the distance between the vehicle and the surrounding obstacle is small, the driver controls the vehicle to travel at a low speed. When the distance between the vehicle and the surrounding obstacle is large, the driver usually controls the vehicle to travel at a high speed. For another example, a correspondence between the second speed limit and the obstacle distance information may be preset by the vehicle or the computing platform 150 before delivery, or may be determined based on the driving mode selected by the user, or may be generated based on the historical operation information of the user on the vehicle.

In some possible implementations, an obstacle on a side of the vehicle may be determined, and a first obstacle distance may be determined based on the obstacle on the side of the vehicle. The obstacle located on the side of the vehicle may be an obstacle located in a preset angle range on the side of the vehicle based on a vehicle coordinate system of the vehicle.

S540: Determine a parking speed of the intelligent driving device based on the first speed limit and the second speed limit.

In an embodiment, a current parking speed of the vehicle may be planned based on a current first speed limit and a current second speed limit.

In another embodiment, parking speeds corresponding to the plurality of path points within the first path remaining distance may be planned based on the first speed limits and second speed limits corresponding to the plurality of path points.

In some possible implementations, the second speed limits corresponding to the plurality of path points of the planned parking path within the first path remaining distance may be determined in a pre-targeting manner.

In an embodiment, the plurality of path points may include a first path point and a second path point, and the second path point is a path point within a pre-targeting distance of the first path point. Obstacle speed limits (which may also be referred to as obstacle speed limits or obstacle-distance speed limits) respectively corresponding to the first path point and the second path point may be determined based on obstacle distances respectively corresponding to the first path point and the second path point. For example, when the vehicle is separately located at the first path point and the second path point, distances between the vehicle and the surrounding obstacle may be assumed based on the planned parking path, and obstacle speed limits corresponding to the first path point and the second path point may be separately determined based on a correspondence between an obstacle distance and a vehicle speed limit.

For example, because the second path point is the point within the pre-targeting distance of the first path point, with consideration of a pre-targeting feature in the manual driving scenario, an obstacle speed limit of the second path point may affect a vehicle speed limit of the first path point. A second speed limit corresponding to the first path point may be determined based on the obstacle speed limit of the second path point and an obstacle speed limit of the first path point.

In an embodiment, a smaller value between the obstacle speed limit of the second path point and the obstacle speed limit of the first path point may be used as the second speed limit corresponding to the first path point.

In another embodiment, a weight average of the obstacle speed limit of the second path point and the obstacle speed limit of the first path point may be used, based on a preset weight (for example, 50%:50% or 30%:70%), as the second speed limit corresponding to the first path point.

In another embodiment, a specific safety margin may be taken into consideration based on the obstacle speed limit of the second path point and the obstacle speed limit of the first path point. For example, a value obtained by subtracting the safety margin from the smaller value between the obstacle speed limit of the second path point and the obstacle speed limit of the first path point is used as the second speed limit corresponding to the first path point.

It should be understood that the foregoing method for determining the second speed limit is merely an example for ease of description. This is not limited in embodiments of this application.

For example, the planned parking path may include a first path interval, a second path interval, and a third path interval within the first path remaining distance, the third path interval may include a first intersection point of a first curve and a second curve, the first curve may be a curve formed based on a first speed limit of each path point, the second curve may be a curve formed based on a second speed limit of each path point, a difference between a path remaining distance of the third path interval and a path remaining distance of the first intersection point is less than or equal to a preset value, a path remaining distance of the first path interval is greater than the path remaining distance of the first intersection point, the first speed limit of the first path interval is greater than the second speed limit, a path remaining distance of the second path interval is less than the path remaining distance of the first intersection point, and the first speed limit of the second path interval is less than the second speed limit. For example, for a plurality of path points included in the third path interval, a difference between a path remaining distance of each path point in the plurality of path points and a path remaining distance corresponding to the first intersection point is less than or equal to the preset value. In other words, all the path points included in the third path interval are within a preset range from the first intersection point.

In some possible implementations, determining a parking speed at each path point based on a first speed limit corresponding to each path point and a second speed limit corresponding to each path point may include respectively determining third curves within the first path interval, the second path interval, and the third path interval based on smallest values in the first curve and the second curve within the first path interval, the second path interval, and the third path interval when a time history of a vehicle speed limit of the first intersection point is greater than or equal to a first threshold, where the third curve indicates the parking speed at each path point.

In some possible implementations, the method may further include: determining, when the time history of the speed limit of the first intersection point is less than the first threshold, a third curve within the third path interval based on a second speed limit corresponding to a first dividing point and a first speed limit corresponding to a second dividing point, where the first dividing point is a dividing point between the first path interval and the third path interval, and the second dividing point is a dividing point between the second path interval and the third path interval; determining a third curve within the first path interval based on a second curve within the first path interval; and determining a third curve within the second path interval based on a first curve within the second path interval.

In embodiments of this application, values of the third curve in a plurality of path intervals are determined based on the time history of the vehicle speed limit of the first intersection point, so that a case in which the planned parking speed fluctuates in a short time due to an excessively short time history of the vehicle speed limit of the intersection point can be avoided. In this way, a parking speed in an auto parking scenario can be closer to a parking speed in the manual parking scenario, thereby improving auto parking experience.

For example, an apparatus for performing the method, for example, a vehicle or a computing platform, may plan a parking speed of the vehicle at a preset frequency. For example, the parking speed of the vehicle may be continuously planned at a frequency like every 100 milliseconds or 200 milliseconds. However, because the vehicle may be in a movement state during parking, results of a plurality of times of planning at a same path point may be different. Consequently, consistency of parking speed planning may be poor.

In some possible implementations, the first reference vehicle speed may be determined based on the first path remaining distance and the current vehicle speed of the vehicle, and the parking speed of the vehicle may be determined based on the first speed limit, the second speed limit, and the first reference vehicle speed.

In embodiments of this application, the first reference vehicle speed is determined, and the parking speed of the vehicle is planned based on the first reference vehicle speed, so that in a vehicle parking process, cases in which results of a plurality of times of parking speed planning at a same path point are inconsistent due to vehicle movement can be reduced. This can improve consistency of parking speed planning.

In some possible implementations, an actual parking path of the vehicle may be determined based on the movement state of the vehicle and the planned parking path, and whether the vehicle has a collision risk may be predicted based on the actual parking path of the vehicle.

For example, when it is predicted that the vehicle has a collision risk, a distance required for braking the vehicle may be determined, to control the vehicle to decelerate at a preset acceleration. For example, in the braking process, the distance required for braking may be determined based on comfort and a comfort braking acceleration. For another example, the distance required for braking may be determined based on safety and a safe braking acceleration. For another example, braking distances required based on comfort and safety may be first separately determined, a smaller value between the two braking distances is used as the distance required for braking the vehicle, and the vehicle is controlled to decelerate at a corresponding acceleration.

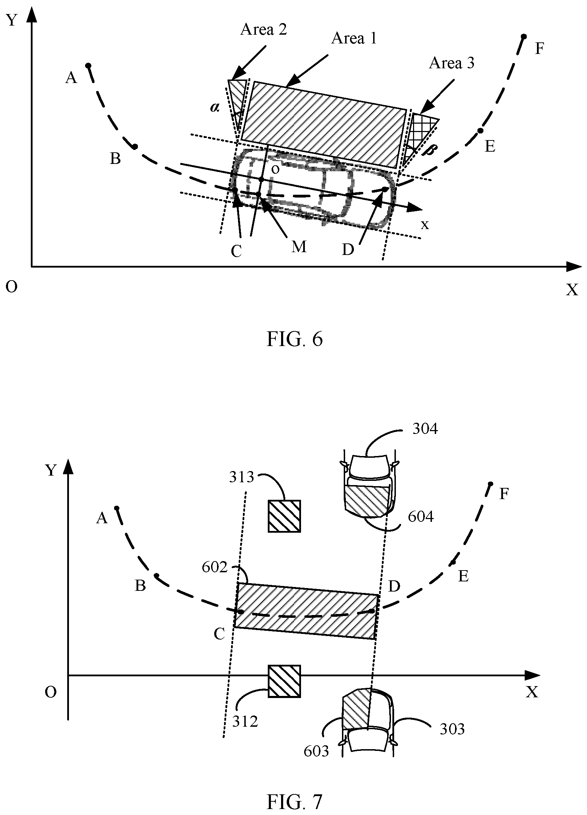

The following further describes the parking method in embodiments of this application with reference to FIG. 6 to FIG. 17. The method in any one of embodiments in FIG. 6 to FIG. 17 may be understood as an extension of the method 500 in FIG. 5, and may be performed by the system architecture in FIG. 4, or may be performed by the intelligent driving device, or may be performed by the computing platform 150, or may be performed by a processor in the computing platform 150.

For example, FIG. 6 is a diagram of a method for determining a path remaining distance according to an embodiment of this application. For example, the scenario shown in FIG. 3 is used as an example. A current location of the vehicle is between a path point C and a path point D, and a dashed line connecting a point A to a point F may be a path planned for auto parking, and may be understood as the path 350 in FIG. 3. In a possible implementation, the method may be performed by the front-end module shown in FIG. 4, or may be performed by the path remaining distance determining module, or may be performed by one or more processors in the front-end module or the path remaining distance module.

As shown in FIG. 6, a coordinate system XOY may be a geodetic coordinate system, or may be a local coordinate system. In the coordinate system XOY, coordinates of each path point, each obstacle, and the like, and a coordinate area occupied by each path point, each obstacle, and the like may not change with a change of a vehicle pose. The coordinate system XOY may be a vehicle coordinate system. In the vehicle coordinate system, a center O of a rear wheel axis of the vehicle may be used as an origin, and a straight line OX and a straight line OY may respectively represent a vertical axis direction and a horizontal axis direction of the vehicle. In a parking process, the vehicle coordinate system XOY may change with the change of the vehicle pose.

It should be understood that, in a process of controlling parking of the vehicle based on a planned path, there may be a deviation between an actual traveling path of the vehicle and the planned path, and the origin of the vehicle coordinate system may not be on the planned path. In the process of parking the vehicle, path points (for example, the point A to the point F) may not coincide with the origin of the vehicle coordinate system.

In an embodiment, the planned path may be adjusted in real time based on a current pose of the vehicle, and a path remaining distance may be determined based on the current location of the vehicle and the planned path.

In another embodiment, the planned path and/or coordinates of a planned path point in the vehicle coordinate system may be obtained based on the geodetic coordinate system and the vehicle pose. The path remaining distance may be determined based on a projection point of the origin of the vehicle coordinate system on the planned path. For example, as shown in FIG. 6, the vehicle is located on a planned path between a path point C and a point D. In other words, the path point C and the point D are located on two sides of a Y axis of the vehicle coordinate system. A point M may be a projection point of the origin of the vehicle coordinate system on a curve CD. The point M may alternatively be understood as an intersection point between the curve CD and the Y axis of the vehicle coordinate system. A distance (namely, a length of a curve MF) along a planned path may be calculated based on the projection point (namely, the point M) and the end point (namely, the point F) of the path. In comparison with a manner of calculating a path remaining distance based on a vehicle location and a heading angle in a coupling manner, in a manner of determining a path remaining distance based on a projection point, the obtained path remaining distance monotonically changes with a parking process of the vehicle. This avoids a problem that the path remaining distance fluctuates with the parking process of the vehicle.

For example, as shown in FIG. 6, two side edges of an area 1 may be respectively parallel to a horizontal axis and a vertical axis of the vehicle coordinate system, and a length of the area 1 may be equal to a length of the vehicle. An included angle $\alpha$ between two side edges of an area 2 may be any angle, for example, 10 degrees or 20 degrees. An included angle $\beta$ between two side edges of an area 3 may be any angle, for example, 10 degrees or 15 degrees. In other words, the area 2 may represent a left rear area of the vehicle, and the area 3 may represent a left front area of the vehicle. A left area of the vehicle is used as an example. A side of the vehicle may be a range included in the area 1, or may be a range included in the area 1 and the area 2, or may be a range included in the area 1 and the area 3, or may be a range included in the area 1, the area 2, and the area 3. In some possible implementations, the side of the vehicle may alternatively be a part of the area 1. In other words, the side of the vehicle may also include a front side of the vehicle and/or a rear side of the vehicle.

For example, FIG. 7 is a diagram of a method for determining an obstacle distance according to an embodiment of this application. As shown in FIG. 7, the scenario shown in FIG. 3 is still used as an example. A current location of the vehicle is between a path point C and a path point D, and surrounding obstacles of the vehicle 302 include columns 312 and 313, and vehicles 303 and 304. Elements in FIG. 7 that are the same as or similar to those in FIG. 3 or FIG. 5 use the same numbers as those in FIG. 3 or FIG. 5.

In some possible implementations, the method may be performed by the front-end module shown in FIG. 4, or may be performed by the obstacle distance determining module, or may be performed by one or more processors in the front-end module or the obstacle distance determining module, or may be performed by a vehicle or the computing platform 150, or may be performed by a processor of the computing platform 150.

For example, as shown in FIG. 7, when the vehicle is located in an area between the path point C and the path point D, only an obstacle located on a side of the vehicle may be taken into consideration when a distance between the vehicle and the obstacle is calculated. For example, the obstacle located on the side of the vehicle may include a column 312 and a column 313, and further include some areas of a vehicle 303 and a vehicle 304 (for example, may be represented by an obstacle 603 and an obstacle 604 respectively). Further, when the distance between the vehicle and the obstacle is calculated, only a convex obstacle may be taken into consideration. A concave obstacle may be equivalent to a combination of a plurality of convex obstacles. In other words, the distance between the vehicle and the convex obstacle may be calculated in a projection cutting manner.

In an embodiment, the distance between a vehicle convex hull and a plurality of convex obstacles on two sides may be calculated according to a Gilbert-Johnson-Kerti (Gilbert-Johnson-Keerthi, GJK) algorithm, and a calculated minimum distance may be used as an obstacle distance of a current path point.

In another embodiment, when the obstacle distance is determined, a specific safety margin may be taken into consideration based on the calculated minimum distance. For example, the obstacle distance may be equal to the calculated minimum distance minus the safety margin, and the safety margin may be 10 centimeters, 20 centimeters, or the like, or may be any other value greater than 0. For another example, the obstacle distance may be equal to a product of the calculated minimum distance and a safety coefficient, and the safety coefficient may be a value less than 1.

In another embodiment, the vehicle is currently located in the area between the path point C and the path point D. When obstacle distances corresponding to path points E and F are calculated, it may be assumed that the vehicle travels to the path points E and F based on a planned parking path, and a distance between the vehicle and a surrounding obstacle is determined accordingly. Alternatively, a traveling hull of the vehicle may be predicted based on the planned parking path, and obstacle distances corresponding to path points E and F are determined accordingly.

In embodiments of this application, the obstacle distance of the path point is calculated in the projection cutting manner according to the GJK algorithm, so that a calculation speed of determining the obstacle distance can be accelerated, and a system delay caused by excessively slow determining of the obstacle distance can be avoided. This can resolve a smearing effect existing when an obstacle distance is determined in the conventional technology.

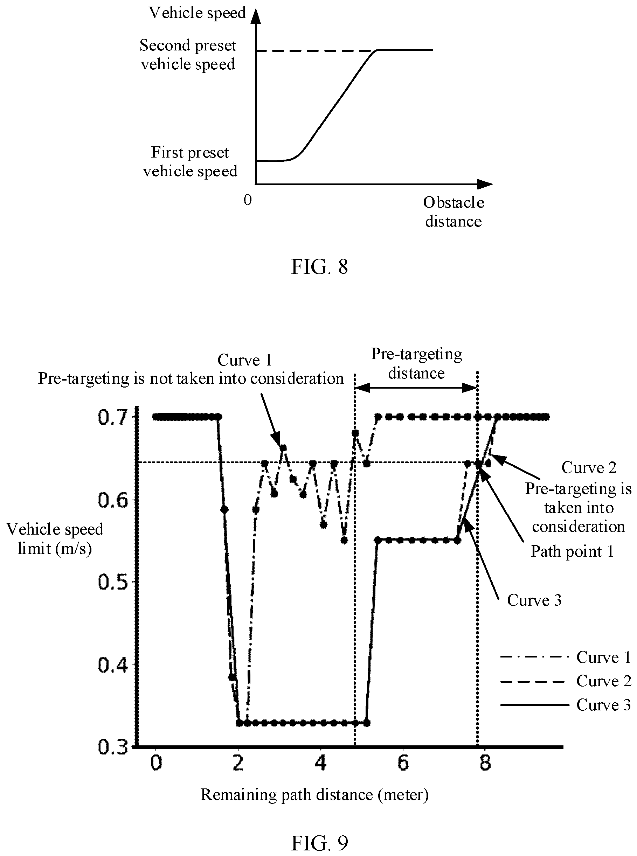

For example, FIG. 8 is a diagram of a method for determining an obstacle-distance speed limit according to an embodiment of this application.

As described above, in a manual driving scenario, when a driver controls a vehicle to pass near an obstacle, there may be a correspondence between a distance between the vehicle and the obstacle and a vehicle speed. For example, when the obstacle distance is less than a first preset value, the driver is usually cautious about operating the vehicle, and tends to control the vehicle to travel at a low vehicle speed, for example, a first preset vehicle speed. For another example, when the obstacle distance is greater than or equal to a second preset value, because the distance between the vehicle and the obstacle is large, the driver may not need to worry that the vehicle may collide with the obstacle in a traveling process. In this case, the driver may tend to control the vehicle to travel at a high vehicle speed, for example, a second preset vehicle speed. For another example, when the obstacle distance is greater than the first preset value and less than the second preset value, a degree of caution of the driver in operating the vehicle may increase as the obstacle distance increases, so that a vehicle speed of the vehicle may increase as the distance between the vehicle and the obstacle increases.

In some possible implementations, when the obstacle distance is greater than the first preset value and less than the second preset value, a linear dependency relationship may be presented between a vehicle speed limit and the obstacle distance. For example, a correspondence between the vehicle speed limit and the obstacle distance may be shown in FIG. 8.

For example, to improve auto parking experience, a vehicle speed limit corresponding to an obstacle distance may be determined based on the obstacle distance. In other words, the obstacle-distance speed limit is determined based on the obstacle distance. For example, the distance between the vehicle and the obstacle is determined in the manner shown in FIG. 7. An obstacle-distance speed limit at a current location of the vehicle may be determined based on a change relationship between the vehicle speed limit and the obstacle distance shown in FIG. 8. In other words, a second speed limit at the current location of the vehicle may be determined. For another example, obstacle distances corresponding to a plurality of path points within a first path remaining distance may be determined, and an obstacle-distance speed limit corresponding to each path point is determined based on a curve shown in FIG. 8. When a pre-targeting operation does not need to be performed, an obstacle-distance speed limit corresponding to each path point may be used as a second speed limit of each path point. For another example, when a pre-targeting operation needs to be performed, a second speed limit corresponding to each path point may be determined according to a method in FIG. 9.

For example, the first preset vehicle speed and the second preset vehicle speed in FIG. 8 may be any values. For example, the first preset vehicle speed may be 1 kilometer per hour (kilometer per hour, km/h) or 2 km/h, and the second preset vehicle speed may be 15 km/h or 20 km/h, or may be another value greater than the first preset vehicle speed.

It should be understood that the change relationship between the vehicle speed limit and the obstacle distance may be set before the vehicle is delivered, or may be determined based on a driving mode selected by the user, or may be determined based on historical control data of the user on the vehicle. This is not limited in embodiments of this application.

For example, FIG. 9 is a diagram of a pre-targeting method according to an embodiment of this application. In FIG. 9, a path point whose path remaining distance is 0 indicates that the path point is a path end point, and a point corresponding to a larger value of a path remaining distance indicates that the path point is closer to a path start point. In other words, path points corresponding to a direction from the path start point to the path end point are actually sequentially distributed from a right side to a left side along a horizontal axis in FIG. 9.

In a manual driving scenario, a driver usually controls a vehicle to travel in a pre-targeting manner. In other words, the driver usually pre-targets an expected trajectory a distance in advance, and it is assumed that the vehicle travels along an ox-axis direction of a current vehicle coordinate system when there is no input to a steering wheel. An ideal operation performed on the steering wheel by the driver may be directly proportional to a lateral displacement deviation of an expected trajectory point in the vehicle coordinate system (namely, a vertical coordinate of the pre-targeted trajectory point in the vehicle coordinate system).

For example, a pre-targeting operation may be taken into consideration when a parking speed is planned, to make an auto parking process similar to the manual parking scenario, so as to improve auto parking experience.

In an embodiment, a corresponding obstacle speed limit may be determined based on an obstacle distance of each path point. Further, a correspondence between the obstacle speed limit corresponding to each path point and a path remaining distance may be determined based on a planned path. For example, a curve 1 shown in FIG. 9, namely, a change relationship between an obstacle speed limit and a path remaining distance without considering a pre-targeting operation, may be obtained. Because the pre-targeting operation is not taken into consideration, in the auto parking scenario, if the parking speed is planned based on the curve 1, the vehicle speed may fluctuate significantly, resulting in poor auto parking experience.

For example, a minimum value of obstacle speed limits of path points within a pre-targeting distance may be used as a second speed limit of a current path point.

In some possible implementations, as shown in FIG. 9, a path remaining distance corresponding to a path point 1 is approximately 8 meters, and it is assumed that the pre-targeting distance is 3 meters. A minimum value (approximately 0.65 m/s) of obstacle speed limits corresponding to a plurality of path points within the pre-targeting distance corresponding to the path point 1 may be used as a second speed limit of the path point 1. In this manner, a second speed limit of each path point may be updated along the direction from the path start point to the path end point, so that a curve 2, namely, an obstacle speed limit in the case of pre-targeting is taken into consideration, can be obtained.

In some possible implementations, when a time history of a vehicle speed limit is less than or equal to a preset threshold, smooth processing may be performed on the vehicle speed limit. For example, as shown in FIG. 9, when the pre-targeting operation is taken into consideration, the second speed limit of the path point 1 is maintained only at a path point adjacent to the path point, and a time history of the vehicle speed limit is short. The second speed limit at the path point 1 may be smoothed to obtain a curve 3. In this way, the planned vehicle speed is closer to a vehicle movement state during manual parking.

In the manual driving mode, the driver usually has a clear operation intent. Therefore, a vehicle speed of the vehicle usually does not fluctuate sharply within a short distance. In embodiments of this application, the pre-targeting operation is taken into consideration, so that in the auto parking process, the vehicle speed can be reduced in advance, and a short-time fluctuation of the vehicle speed can also be suppressed. Further, the vehicle speed limit is smoothed based on the time history of the vehicle speed limit, so that the vehicle speed limit can be closer to the vehicle movement state during manual parking.

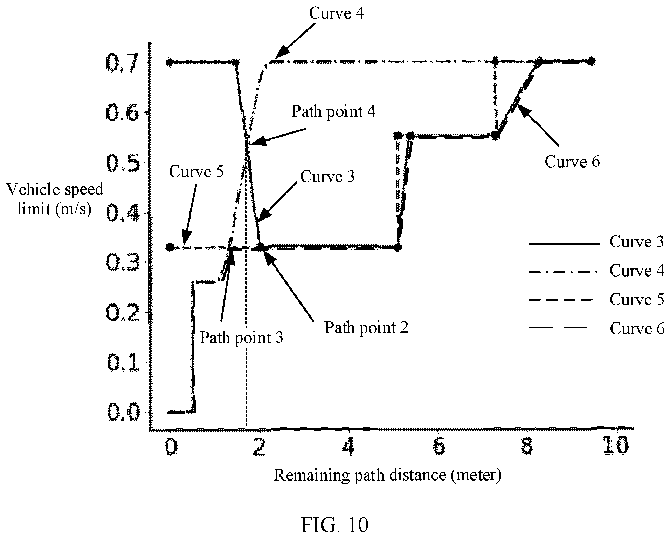

For example, FIG. 10 is a diagram of another method for determining a vehicle speed limit according to an embodiment of this application.

As described above, in a manual parking scenario, in a process in which a vehicle travels into a target parking space from a location outside the target parking space, a driver is more cautious about vehicle operation and tends to control the vehicle to travel at a lower vehicle speed as the vehicle is closer to a parking end point. For auto parking, a change relationship between a vehicle speed and a path remaining distance is taken into consideration, so that auto parking experience can be improved.

In an embodiment, a first speed limit (which may also be referred to as a path remaining distance speed limit) corresponding to each path point may be determined based on the change relationship between the vehicle speed and the path remaining distance. For example, a curve 4 shown in FIG. 10 may represent a change relationship between the first speed limit value and a path remaining distance. In other words, the path remaining distance speed limit corresponding to each path point may be determined based on the curve 4.

It should be understood that the change relationship (namely, the curve 4) between the first speed limit and the path remaining distance shown in FIG. 10 is merely an example for ease of description, and the curve 4 may alternatively be in another form. The change relationship between the vehicle speed and the path remaining distance may be set before the vehicle is delivered, or may be determined based on a driving mode selected by the user, or may be determined based on historical operation information of the user on the vehicle. This is not limited in embodiments of this application.

For example, a parking speed at each path point may be planned based on the first speed limit and a second speed limit that correspond to each path point.

In some possible implementations, the second speed limit of each path point may be shown by the curve 2 or the curve 3 in FIG. 9.

In an embodiment, the second speed limit of each path point is shown as the curve 3 in FIG. 9, and a parking speed at each path interval may be planned based on the curve 3 and the curve 4. For example, a vehicle speed limit between a path point 2 and a path point 4 may be determined based on the curve 3, and a vehicle speed limit between the path point 4 and a path point 3 may be determined based on the curve 4. In other words, a minimum value in the curve 3 and the curve 4 may be used as the vehicle speed limit. For another example, a determined vehicle speed limit may be used as a planned parking vehicle speed in a path interval. In other words, a vehicle speed at each path point may be planned based on a smaller value between the first speed limit and the second speed limit of each path point.

In embodiments of this application, in a process of determining an obstacle speed limit and a path remaining distance speed limit, the pre-targeting operation is taken into consideration, and impact of the path remaining distance on the vehicle speed is also taken into consideration, so that auto parking experience can be improved.

In another embodiment, an obstacle-distance historical speed limit of each path point may be determined based on an obstacle speed limit of each path point. In other words, a historical second speed limit of each path point is determined based on the second speed limit of each path point. For example, for the path point 2, a path point on a right side of the path point 2 is a historical path point of the path point 2. An obstacle-distance speed limit of the historical path point may be referred to as an obstacle-distance historical speed limit of the path point, or may be referred to as an obstacle-distance historical vehicle speed limit of the path point. For another example, as shown in FIG. 10, a curve 5 may be an obstacle-distance historical speed limit that corresponds to each path point and that is determined based on the curve 3. For another example, as shown in FIG. 10, a vehicle speed limit between the path point 2 and the path point 3 may be determined based on the curve 5, and a planned vehicle speed in the path interval is determined based on the vehicle speed limit. In other words, the vehicle speed at each path point may be planned based on a smaller value between the historical second speed limit and the first speed limit of each path point. The vehicle speed limit determined in this manner may be shown by a curve 6 in FIG. 10. In other words, a path interval between the path 2 and a path point at a right side of the path 2 may be understood as a first path interval in the method 500, a path interval between the path point 3 and a path point at a left side of the path point 3 may be understood as a second path interval in the method 500, the path point 4 may be understood as a first intersection point in the method 500, and a path interval between the path point 2 and the path point 3 is understood as a third path interval in the method 500. Because a time history of a vehicle speed limit of the first intersection point is short, a parking speed in the third path interval may be planned based on a second speed limit corresponding to the path point 2 and a first speed limit corresponding to the path point 3.

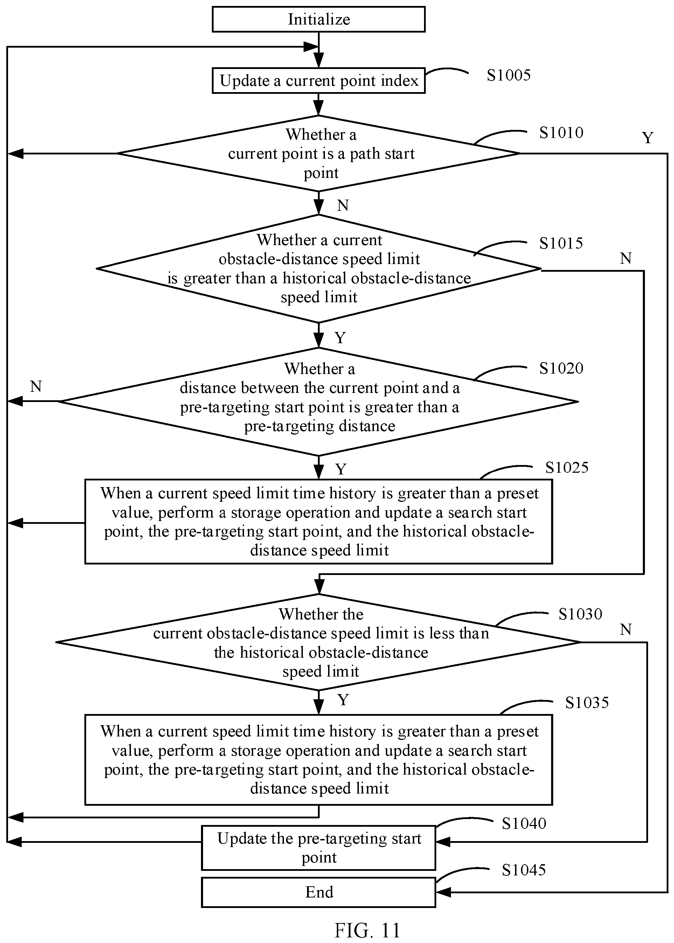

For example, FIG. 11 is a schematic flowchart of a pre-targeting operation according to an embodiment of this application.

S1005: Update a path point index.

For example, a current path point may be updated along a direction from a path start point to a path end point based on a planned path. In other words, second speed limits of path points may be sequentially updated in a preset order.

S1010: Determine whether the current path point is the path start point.

For example, if the current path point is the path start point, for example, an obstacle-distance speed limit of each path point obtained after the pre-targeting operation may be determined in a manner shown in FIG. 8.

For example, if the current path point is not the path start point, step S1015 may be performed.

S1015: Determine whether a current obstacle-distance speed limit is greater than an obstacle-distance historical speed limit.

For example, when the current obstacle-distance speed limit is greater than the obstacle-distance historical speed limit, step S1020 may be performed. When the current obstacle distance is not greater than the obstacle-distance historical speed limit, step S1030 may be performed.

S1020: Determine whether a distance between the current point and a pre-targeting start point is greater than a pre-targeting distance.

For example, when the distance is greater than the pre-targeting distance, step S1025 may be performed. When the distance is less than or equal to the pre-targeting distance, a current point index may be updated.

S1025: When a current speed limit time history is greater than a preset value, perform a storage operation and update a search start point, the pre-targeting start point, and the obstacle-distance historical speed limit.

For example, when the current speed limit time history is greater than or equal to the preset value, the obstacle-distance historical speed limit may be used as a speed limit obtained after the current path point is pre-targeted, the current path point may be used as a new search start point and a new pre-targeting start point, and a recorded obstacle-distance historical speed limit is updated based on an obstacle-distance speed limit of the current path point. In other words, a second speed limit of the current path point may be determined in this manner. Alternatively, a second speed limit of each path point within the pre-targeting distance of the path point may be determined, so that a speed of the second speed limit of each path point may be determined. After execution is completed, step S1005 may be performed.

For example, when the current speed limit time history is less than the preset value, step S1005 may be directly performed.

S1030: Determine whether the current obstacle-distance speed limit is less than the recorded obstacle-distance historical speed limit.

For example, when the current obstacle-distance speed limit is less than the recorded obstacle-distance historical speed limit, step S1035 may be performed; otherwise, step S1040 may be performed.

S1035: When a current speed limit time history is greater than a preset value, perform a storage operation and update a search start point, the pre-targeting start point, and the obstacle-distance historical speed limit.

For example, when the current speed limit time history is greater than or equal to the preset value, the obstacle-distance historical speed limit may be used as a speed limit obtained after the current path point is pre-targeted, the current path point may be used as a new search start point and a new pre-targeting start point, and a recorded obstacle-distance historical speed limit is updated based on an obstacle-distance speed limit of the current path. After execution is completed, step S1005 may be performed.

For example, when the current speed limit time history is less than the preset value, step S1005 may be directly performed.

S1040: Update the pre-targeting start point.

For example, when the obstacle-distance speed limit of the current path point is equal to the obstacle-distance historical speed limit, the current path point may be used as the new pre-targeting start point. After execution is completed, step S1005 may be performed.

S1045: End.

For example, in the manner shown in FIG. 9, a pre-targeting operation may be performed on all involved path points to obtain corresponding second speed limits (the curve 2 or the curve 3). However, in this manner, a large quantity of resources are required in the pre-targeting operation process, and timeliness of a planned parking speed may be affected.

In embodiments of this application, based on the relationship between the obstacle-distance speed limit of the current path point and the historical obstacle-distance speed limit and a time history of a vehicle speed limit of the current path point, a quantity of pre-targeting times can be reduced, and resources occupied by the pre-targeting operation can be reduced. In this way, while a pre-targeting effect of manual parking is implemented, a calculation speed of determining the second speed limit of each path point can be improved, resource consumption of planning a parking speed can be reduced, and efficiency of planning the parking speed can be improved.

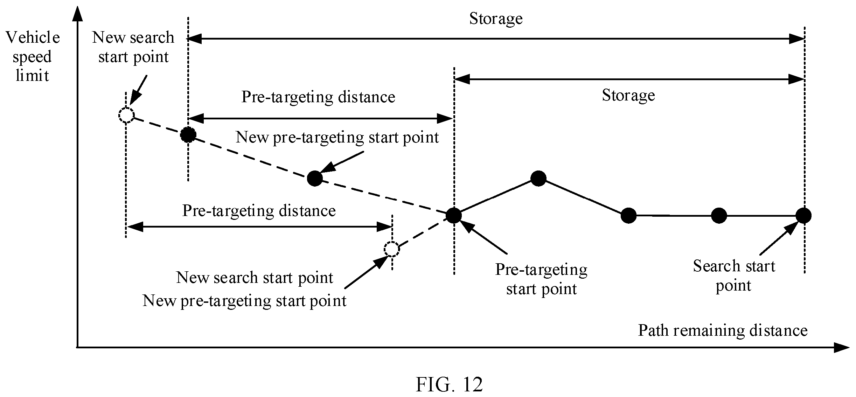

For example, the pre-targeting operation method in FIG. 11 is described with reference to FIG. 12. For example, in nine path points shown in FIG. 12, obstacle-distance historical speed limits corresponding to five path points on a right side are determined, and are stored by a storage module. When it is determined, in the pre-targeting manner shown in FIG. 11, that the pre-targeting start point needs to be updated, a new pre-targeting start point may be determined and a new search start point may be determined along a side that is of the pre-targeting start point and that is close to a path end point, and an obstacle speed limit is further dynamically updated according to the method shown in FIG. 11.

For example, according to the methods in FIG. 8 to FIG. 12, one or more of the first speed limit, the second speed limit, and the parking speed that correspond to each path point may be determined based on preset duration, for example, every 100 milliseconds or 200 milliseconds.

In embodiments of this application, a manner of the pre-targeting operation is determined based on a magnitude relationship between the obstacle speed limit of the current path point and the obstacle-distance historical speed limit, so that resources occupied by the pre-targeting operation can be reduced, and an operation speed of the pre-targeting operation can be increased, thereby improving timeliness of vehicle speed planning.

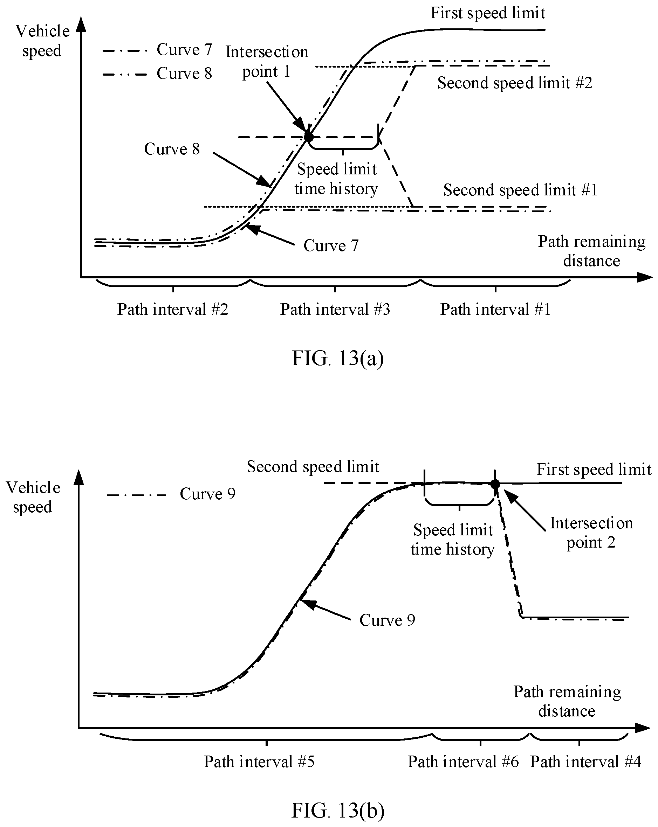

For example, FIG. 13(a) to FIG. 13(d) are diagrams of scenarios of determining a vehicle speed limit according to an embodiment of this application. In the scenario shown in FIG. 13(a) to FIG. 13(d), if a first speed limit and/or a second speed limit in a same coordinate system have/has a short-time speed constraint change, the short-time speed constraint change may be removed through a pruning operation, to suppress coupling disturbance of the first speed limit and the second speed limit.

In an embodiment, as shown in FIG. 13(a), a change relationship between a second speed limit #1 and a path remaining distance may be presented as a "Z"-shaped step change relationship. An intersection point 1 is an intersection point of a curve of a first speed limit and curves of second speed limits #1 and #2. When a speed limit time history is less than or equal to a preset value, a change relationship, shown by a curve 7, between a vehicle speed limit and a path remaining distance may be obtained through a pruning operation based on the second speed limit and the first speed limit. In other words, a path interval #1 may be understood as the first path interval in the method 500, a path interval 2 may be understood as the second path interval in the method 500, and a path interval #3 may be understood as the third path interval in the method 500. Vehicle speed limits in path intervals #1, #2, and #3 are separately determined based on the pruning operation, to obtain a change relationship, shown by a curve 7, between a vehicle speed limit and a path remaining distance. A parking speed at each path point may be planned based on the curve 7.

In another embodiment, as shown in FIG. 13(a), a change relationship between a second speed limit #2 and a path remaining distance may be presented as an inverted "Z"-shaped step change relationship. When a speed limit time history is less than or equal to a preset value, a change relationship, shown by a curve 8, between a vehicle speed limit and a path remaining distance may be obtained through a pruning operation based on the second speed limit and the first speed limit.

In another embodiment, as shown in FIG. 13(b), when the speed limit time history is greater than or equal to the preset value, the vehicle speed limit is determined based on the second speed limit and the first speed limit, and a smaller value between the second speed limit and the first speed limit may be used as the vehicle speed limit through a pruning operation. A change relationship, shown by a curve 9, between the vehicle speed limit and the path remaining distance may be obtained. In other words, path intervals #4, #5, and #6 may be respectively understood as the first path interval, the second path interval, and the third path interval in the method 500. Because a time history of a vehicle speed limit of an intersection point 2 is greater than or equal to a preset threshold, a smaller value between a second speed limit and a first speed limit that correspond to each path point may be used as a vehicle speed limit of the path point, that is, the curve 9 is obtained, and a parking speed at each path point may be planned based on the curve 9.

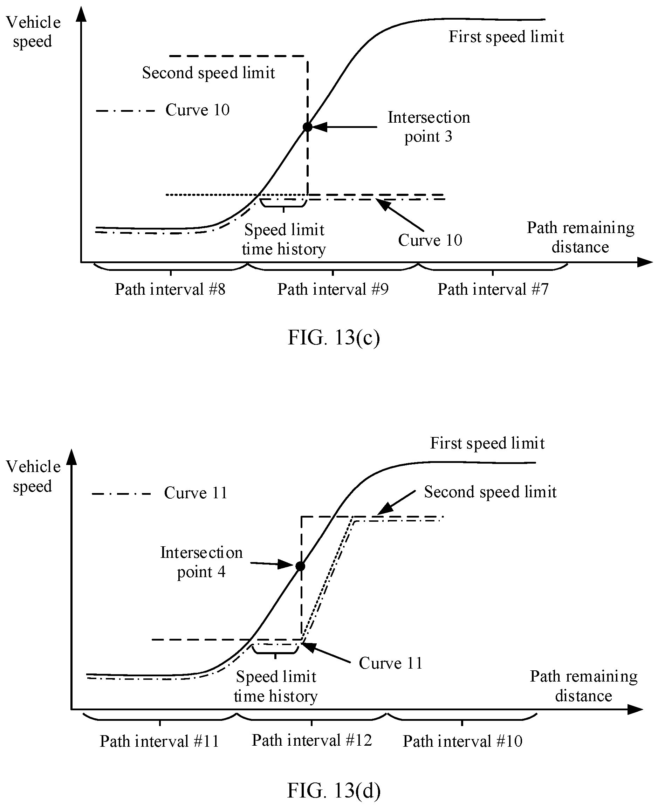

In another embodiment, as shown in FIG. 13(c), a vehicle speed limit shown by a curve 10 may be obtained through a pruning operation based on the second speed limit and the first speed limit. For example, path intervals #7, #8, and #9 may be respectively understood as the first path interval, the second path interval, and the third path interval in the method 500.

In another embodiment, as shown in FIG. 13(d), a vehicle speed limit shown by a curve 11 may be obtained through a pruning operation based on the second speed limit and the first speed limit. For example, there are a plurality of intersection points between the curve of the first speed limit and the curves of the second speed limits. An intermediate point (namely, an intersection point 4) between the plurality of intersection points may be understood as the first intersection point in the method 500, and path intervals #10, #11, and #12 may be respectively understood as the first path interval, the second path interval, and the third path interval in the method 500.

In another embodiment, the process of obtaining the curve 6 based on the curve 3 and the curve 4 in FIG. 10 may be understood as a possible implementation of the pruning operation in FIG. 13(a) to FIG. 13(d).

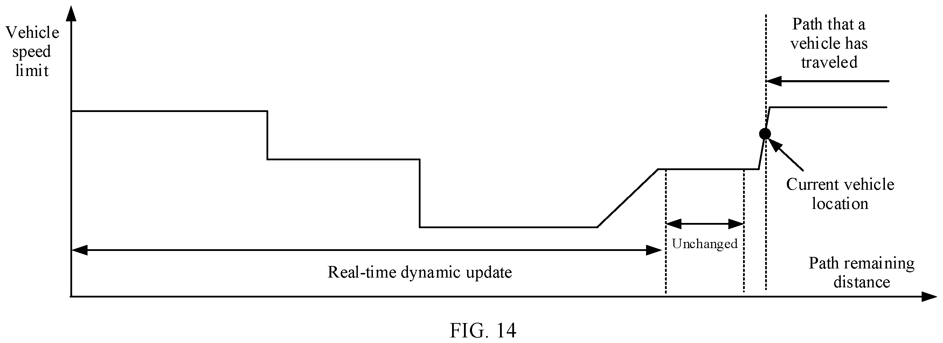

For example, FIG. 14 is a diagram of a manner of updating a vehicle speed limit according to an embodiment of this application. As shown in FIG. 14, in a calculation period (for example, 100 milliseconds or 20 milliseconds), an obstacle speed limit within a distance may remain unchanged, and the rest parts may be updated in real time based on ambient environment information obtained by a sensing module, for example, information such as obstacle information, real-time vehicle positioning information, and a planned path of a local rasterized map, so that short-time disturbance caused by a speed constraint due to a change of an external factor can be avoided, to meet both comfort and human-likeness indicator requirements.

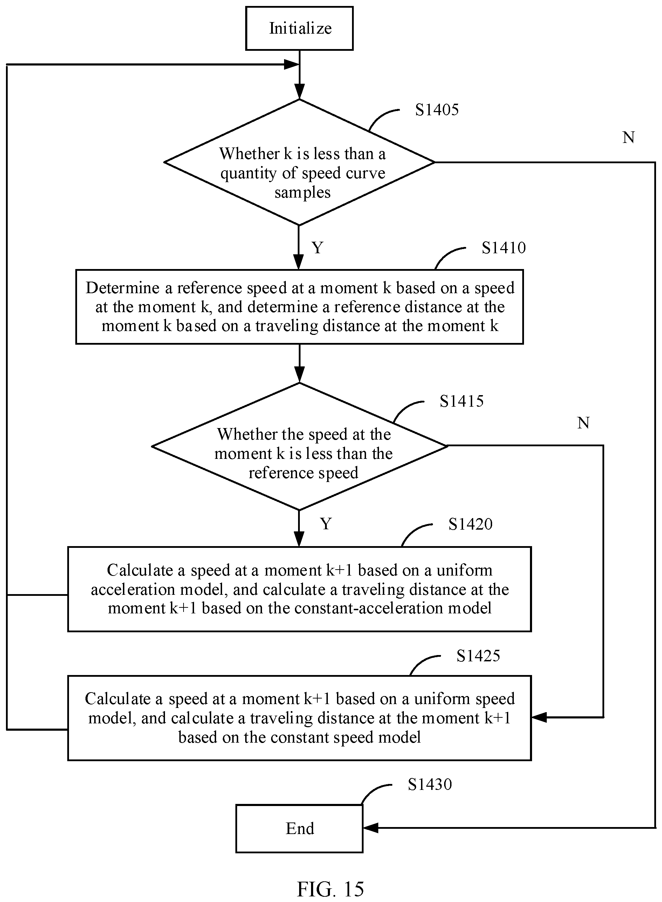

For example, FIG. 15 is a schematic flowchart of a vehicle speed optimization method according to an embodiment of this application.

For example, a determined vehicle speed limit may be used as an upper boundary of vehicle speed optimization, and a vehicle speed may be controlled, based on comfort, to approach the upper boundary of the vehicle speed optimization at a comfortable acceleration, so that at different moments in a parking process, determined vehicle speed planning curves may have high consistency, to avoid a case in which parking experience is affected because there is a large difference between the vehicle speed planning curves at different moments. The vehicle speed optimization may be divided into an acceleration phase, a stabilization phase, and a deceleration phase. According to the method shown in FIG. 15, a vehicle speed in the acceleration phase may be optimized. The method may include the following steps:

S1405: Determine whether a path point index k is less than a quantity of speed curve samples.

For example, when k is less than the quantity of speed curve samples, it may be considered that a path point is on a planned path, and step S1410 may be performed. When k is greater than or equal to the quantity of speed curve samples, it may be considered that a speed of a path point on the planned path has been optimized, and step S1430 may be performed.

S1410: Determine a reference speed at a moment k based on a speed at the moment k, and determine a reference distance at the moment k based on a traveling distance at the moment k.

For example, that the reference distance at the moment k is determined based on the traveling distance at the moment k means that the reference distance at the moment k is determined based on a path remaining distance at the moment k.

For example, a mapping relationship between a reference movement state (for example, the reference speed and the reference distance) at the moment k and a movement state (for example, a speed and the traveling distance) at the moment k may be set before the vehicle is delivered, or may be determined based on a driving mode selected by a user, or may be determined based on historical operation information of the user. This is not limited in embodiments of this application.

S1415: Determine whether the speed at the moment k is less than the reference speed at the moment k.

For example, when the speed at the moment k is less than the reference speed at the moment k, step S1420 may be performed; otherwise, step S1425 may be performed.

S1420: Determine a speed at a moment k+1 based on a uniform acceleration model, and determine a traveling distance at the moment k+1 based on the uniform acceleration model.

S1425: Determine a speed at a moment k+1 based on a uniform speed model, and determine a traveling distance at the moment k+1 based on the uniform speed model.

S1430: End.

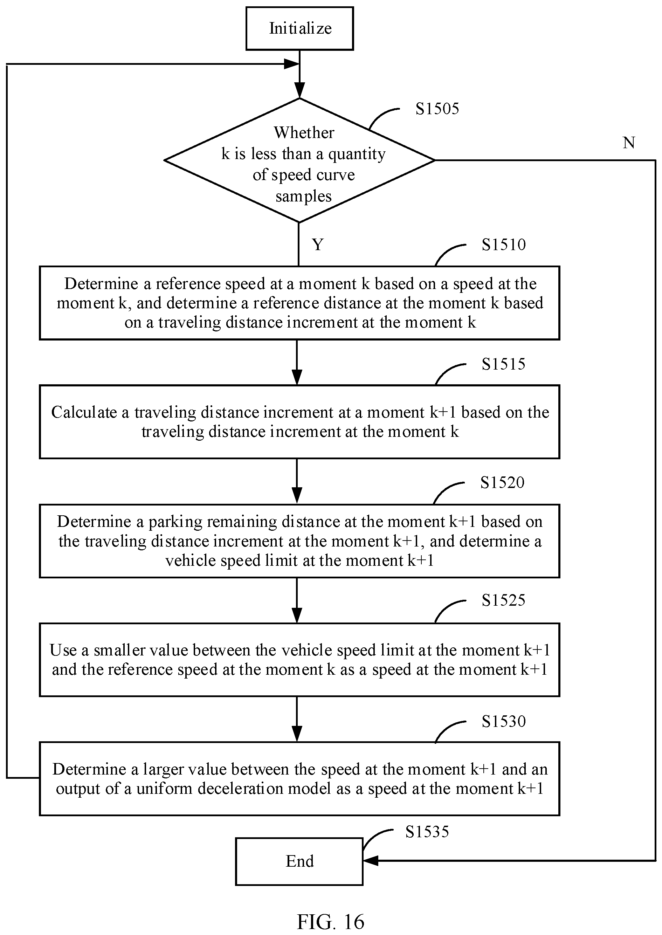

For example, FIG. 16 is a schematic flowchart of another vehicle speed optimization method according to an embodiment of this application. According to the method shown in FIG. 16, a vehicle speed in the deceleration phase may be optimized. The method may include the following steps:

S1505: Determine whether a path point index k is less than a quantity of speed curve samples.

For example, when k is less than the quantity of speed curve samples, it may be considered that a path point is on a planned path, and step S1510 may be performed. When k is greater than or equal to the quantity of speed curve samples, it may be considered that a speed of a path point on the planned path has been optimized, and step S1530 may be performed.

S1510: Determine a reference speed at a moment k based on a speed at the moment k, and determine a reference distance at the moment k based on a traveling distance increment at the moment k.

S1515: Calculate a traveling distance increment at a moment k+1 based on the speed at the moment k.

S1520: Determine a path remaining distance based on the traveling distance increment at the moment k+1, and determine a vehicle speed limit at the moment k+1 based on the path remaining distance.

S1525: Update a speed at the moment k+1 based on a smaller value between the vehicle speed limit at the moment k+1 and the reference speed.

S1530: Determine a larger value between the speed at the moment k+1 and an output of a uniform deceleration model as a speed at the moment k+1.

S1535: End.

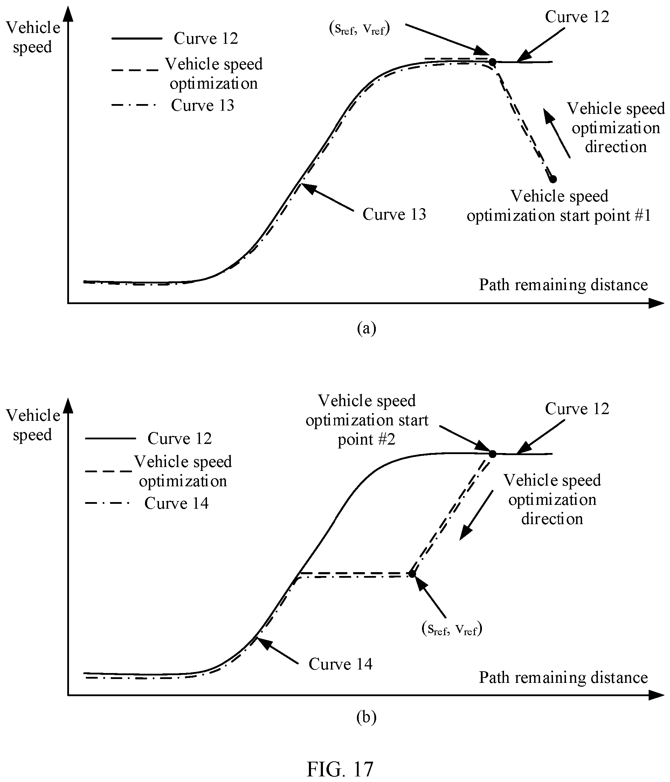

The following describes the vehicle speed optimization methods in FIG. 15 and FIG. 16 with reference to FIG. 17. For example, FIG. 17 is a diagram of a vehicle speed optimization method according to an embodiment of this application. A curve 12 may represent a vehicle speed limit. For example, the curve 12 may be understood as a path remaining distance limit, or may be understood as a vehicle speed limit obtained after the pruning operation shown in FIG. 12 is performed.

For example, a vehicle speed optimization operation may be performed from a vehicle speed optimization start point along a vehicle speed optimization direction by determining a reference vehicle speed (denoted as $v_{ref}$) and a reference distance (denoted as $s_{ref}$). For example, as shown in (a) in FIG. 17, vehicle speeds in an acceleration phase and a stabilization phase may be optimized. For a vehicle speed optimization start point #1, an optimized vehicle speed curve may be shown as a curve 13. For another example, as shown in (b) in FIG. 17, vehicle speeds in a deceleration phase and the stabilization phase may be optimized. For a vehicle speed optimization start point #2, an optimized vehicle speed curve may be shown as a curve 14. For another example, because an acceleration, the reference vehicle speed, the reference distance, and the like in the vehicle speed optimization process may be preset values, vehicle speed optimization results at different moments in a parking process may be consistent. In other words, the reference vehicle speed in FIG. 17 may be understood as the first reference speed in the method 500.

The methods in embodiments in FIG. 5 to FIG. 17 are mainly based on comfort and human-likeness, to optimize a vehicle speed. In an auto parking process, there may be a deviation between an actual driving trajectory, movement state, and the like of the vehicle and a planned trajectory, movement state, and the like. Whether a collision may occur in an actual running process of the vehicle may be deduced through the functional safety module shown in FIG. 4, so that safety performance of auto parking can be improved.

For example, whether a collision of the vehicle may occur may be deduced in a non-time-reference path tracking manner. Non-time-reference path tracking may be understood as that, based on a planned path, a non-time reference value that monotonically increases with time is selected as a reference scalar, and a feedback control rate is determined based on the non-time reference scalar, so that an actual traveling path of the vehicle matches the planned path. This can avoid a hazard caused by reducing or even losing a tracking capability in a case of poor vehicle speed control, and can improve a path tracking capability of a system in an uncertain environment.

For example, a deviation state equation that may be established in the non-time-reference path tracking manner may be shown in Formula (1):

$$\begin{cases} \dfrac{dy_e}{-dx} = \dfrac{dy_r(x)}{-dx_r} - \dfrac{dy(x)}{-dx} = -\tan\varphi_r + \tan\varphi \\ \dfrac{d\varphi_e}{-dx} = \dfrac{d\varphi_r(x)}{-dx_r} - \dfrac{d\varphi(x)}{-dx} = -\dfrac{\rho_r}{\cos\varphi_r} + \dfrac{\tan\delta_d}{L\cos\varphi} \end{cases} \quad (1)$$

Here, x, y, and φ may respectively represent an actual horizontal coordinate, an actual vertical coordinate, and an actual heading angle of the vehicle; $x_r$, $y_r$, and $\varphi_r$ may respectively represent a horizontal coordinate (which may also be referred to as a planned horizontal coordinate) of the vehicle planned based on a planned parking path, a planned vertical coordinate, and a planned heading angle, that is, a subscript r represents a planning parameter that is based on the planned parking path; $x_e$, $y_e$, and $\varphi_e$ may respectively represent a deviation between the actual horizontal coordinate and the planned horizontal coordinate, a deviation between the actual vertical coordinate and the planned vertical coordinate, and a deviation between the actual heading angle and the planned heading angle, that is, a subscript e represents an actual parameter of the vehicle; and L may represent an axle distance of the vehicle, $\delta_d$ may represent an equivalent front wheel steering angle, and $\rho_r$ may represent a curvature of the planned parking path.

A parking path tracking control rate may be obtained according to the Lyapunov theory, as shown in Formula (2):

$$\delta_d = \arctan\left(L\cos^3\varphi\left(\frac{\rho_r}{\cos^3\varphi_r} + \kappa_0(\tan\varphi - \tan\varphi_r) + \kappa_1\sigma + \kappa_2\mathrm{sgn}(\sigma)\right)\right) \quad (2)$$

Here, $\kappa_0$, $\kappa_1$, and $\kappa_2$ may represent coefficients of the control equation, and σ may represent a sliding mode surface.

An actual traveling trajectory of the vehicle in a future time period may be deduced based on Formula (2), and whether the derived trajectory has a collision risk and a collision risk point may be determined based on a collision detection algorithm. When a collision risk is detected, slow braking may be performed at a fixed deceleration.

In an embodiment, a smaller value between a distance required for comfortable parking and an allowed braking traveling distance may be used as an initial remaining distance, to ensure parking safety. Therefore, a speed curve planned by the functional safety module is represented as:

$$\begin{cases} v_k = \max\left(v_0 - a_{actual}t_k, 0\right) \\ s_k = \max\left(s_0 - v_0t_k + 0.5a_{actual}t_k^2, 0\right) \end{cases}, \quad t_k = 0:0.1:3 \quad (3)$$

Here, $t_k$ may represent a calculation step, $v_0$ is an initial vehicle speed, and $a_{actual}$ and $s_0$ may represent an actual deceleration and an initial remaining distance that are used by the planned speed curve, and may be respectively:

$$a_{actual} = \max\left(a_{dec}, 0.5v_0^2/s_1\right) \quad (4)$$

$$s_0 = \min\left(v_0t_{dec} - 0.5a_{actual}t_{dec}^2, s_1\right) \quad (5)$$

Here, $a_{dec}$ is a comfortable braking deceleration, $s_1$ is the allowed braking traveling distance, and $t_{dec}$ is braking time.

In embodiments of this application, a speed optimization module of a fully auto parking system that is mainly based on the human-likeness and comfort indicators uses an output of a speed constraint module as an upper boundary of the speed optimization module, and the upper boundary is approached from a given speed optimization start point at a comfortable acceleration, to output highly consistent parking speed curves. Further, the speed optimization module is decomposed into an acceleration phase, a stabilization phase, and a deceleration phase, and an initial guess solution of each phase is provided, to improve calculation efficiency of the speed optimization module. Further, a functional safety module of the fully auto parking system that is mainly based on safety and comfort indicators deduces, through a non-time-reference parking trajectory deduction module, whether a collision risk and a collision risk point exist in a future time period. A safe and comfortable braking module slowly brakes at a fixed deceleration on the basis of ensuring safe parking.

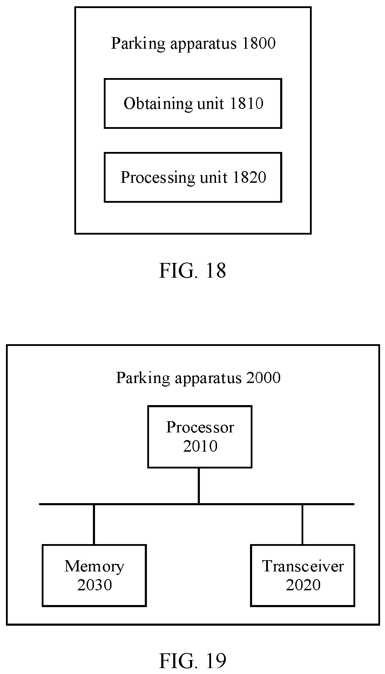

The methods provided in embodiments of this application are described above in detail with reference to FIG. 5 to FIG. 17. Apparatuses provided in embodiments of this application are described below in detail with reference to FIG. 18 to FIG. 19. Descriptions of apparatus embodiments correspond to the descriptions of the method embodiments. Therefore, for content that is not described in detail, refer to the foregoing method embodiments.

For example, FIG. 18 is a block diagram of an auto parking apparatus 1800 (briefly referred to as an apparatus 1800 below) according to an embodiment of this application. The apparatus may include an obtaining unit 1810 and a processing unit 1820.

The apparatus 1800 may include units that perform any method in FIG. 5 to FIG. 17, and the units in the apparatus 1800 may be configured to perform corresponding procedures in the method embodiments in FIG. 5 to FIG. 17.

When the apparatus 1800 is configured to perform the method 500 in FIG. 5, the obtaining unit 1810 may be configured to perform step S510 in the method 500, and the processing unit 1820 may be configured to perform step S520 to step S540 in the method 500.

Specifically, the obtaining unit 1810 may be configured to obtain a first path remaining distance, where the first path remaining distance includes a distance between a vehicle and an end point of a planned parking path along the planned parking path. The processing unit 1820 may be configured to: determine a first speed limit based on the first path remaining distance; determine a second speed limit based on first obstacle distance information, where the first obstacle distance information includes a distance between the vehicle and a surrounding obstacle; and determine a parking speed of the vehicle based on the first speed limit and the second speed limit.

For example, the vehicle may be the intelligent driving device shown in FIG. 1.

Optionally, the processing unit 1820 may be configured to: determine a path remaining distance between each path point in a plurality of path points of the planned parking path within the first path remaining distance and the end point of the planned parking path based on the plurality of path points; determine, based on the path remaining distance between each path point and the end point of the planned parking path, a first speed limit corresponding to each path point; determine, based on obstacle distance information corresponding to each path point, a second speed limit corresponding to each path point; and determine a parking speed at each path point based on the first speed limit corresponding to each path point and the second speed limit corresponding to each path point.

Optionally, the plurality of path points include a first path point and a second path point. The second path point is a path point within a pre-targeting distance from the first path point. The processing unit 1820 may be configured to: determine an obstacle speed limit of the first path point based on an obstacle distance corresponding to the first path point; determine an obstacle speed limit of the second path point based on an obstacle distance corresponding to the second path point; and determine, based on the obstacle speed limit of the first path point and the obstacle speed limit of the second path point, a second speed limit corresponding to the first path point.

Optionally, the processing unit 1820 may be configured to determine a smaller value between the obstacle speed limit of the first path point and the obstacle speed limit of the second path point as the second speed limit corresponding to the first path point.

Optionally, the planned parking path includes a first path interval, a second path interval, and a third path interval within the first path remaining distance, the third path interval includes a first intersection point of a first curve and a second curve, the first curve is a curve formed based on the first speed limit of each path point, and the second curve is a curve formed based on the second speed limit of each path point. A difference between a path remaining distance of the third path interval and a path remaining distance of the first intersection point is less than or equal to a preset value, a path remaining distance of the first path interval is greater than the path remaining distance of the first intersection point, a first speed limit of the first path interval is greater than the second speed limit, a path remaining distance of the second path interval is less than the path remaining distance of the first intersection point, and the first speed limit of the second path interval is less than the second speed limit. The processing unit 1820 may be configured to: determine third curves within the first path interval and the second path interval based on smallest values in the first curve and the second curve within the first path interval and the second path interval; and when a time history of a speed limit of the first intersection point is greater than or equal to a first threshold, determine a third curve within the third path interval based on a smallest value in the first curve and the second curve within the third path interval; or when a time history of a speed limit of the first intersection point is less than a first threshold, determine a third curve within the third path interval based on a second speed limit corresponding to a first dividing point and a first speed limit corresponding to a second dividing point, where the first dividing point is a dividing point between the first path interval and the third path interval, the second dividing point is a dividing point between the second path interval and the third path interval, and the third curve indicates the parking speed at each path point.

Optionally, the processing module 1820 may be further configured to determine a first reference vehicle speed based on the first path remaining distance and a current vehicle speed of the vehicle. The processing module 1820 may be configured to determine a parking speed of the vehicle based on the first speed limit, the second speed limit, and the first reference vehicle speed.

Optionally, the processing module 1820 may be further configured to: determine an actual parking path of the vehicle based on a movement state parameter of the vehicle and the planned parking path; and determine, based on the actual parking path, whether the vehicle has a collision risk.

Optionally, the processing module 1820 may be further configured to: determine a braking distance when determining that the vehicle has a collision risk; and control, based on the braking distance, the vehicle to brake.

Optionally, the processing module 1820 may be further configured to determine the first path remaining distance based on the planned parking path and a projection of a first feature point of the vehicle on the planned parking path, where the first feature point is used to construct a vehicle coordinate system of the vehicle.

Optionally, the processing module 1820 may be further configured to: determine an obstacle on a side of the vehicle; and determine a first obstacle distance based on the obstacle on the side of the vehicle.

It should be understood that division into units in the apparatus is merely logical function division. During actual implementation, all or some of the units may be integrated into one physical entity or may be physically separated. All units of the apparatus may be implemented in a form of software invoked by a processor, or all units may be implemented in a form of a hardware circuit, or some units may be implemented in a form of software invoked by a processor, and a remaining part may be implemented in a form of a hardware circuit.

In a specific implementation process, the obtaining unit 1810 may be implemented by at least one transceiver or a transceiver-related circuit, and the processing unit 1820 may be implemented by at least one processor or a processor-related circuit. In an example, one or more processors may determine the first speed limit based on the first path remaining distance. In an example, the one or more processors may determine the second speed limit based on the first obstacle distance information. In another embodiment, the one or more processors may determine the parking speed of the vehicle based on the first speed limit and the second speed limit.

For example, in a specific implementation process, the apparatus 1800 may be the intelligent driving device 100 shown in FIG. 1, or the apparatus 1800 may be a terminal disposed in the intelligent driving device, for example, a computing platform 150. In another example, the intelligent driving device shown in FIG. 1 is a vehicle, and the apparatus 1800 may be the computing platform 150 that is disposed in the vehicle and that is shown in FIG. 1. In another embodiment, the apparatus 1800 may be a processor or a chip in the computing platform 150.

For example, FIG. 19 is a block diagram of another auto parking apparatus 2000 (briefly referred to as an apparatus 2000 below) according to an embodiment of this application. The apparatus 2000 may include a processor 2010, an interface circuit 2020, and a memory 2030. The processor 2010, the interface circuit 2020, and the memory 2030 are connected through an internal connection path. The memory 2030 is configured to store instructions. The processor 2010 is configured to execute the instructions stored in the memory 2030, to receive/send some parameters through the interface circuit 2020. Optionally, the memory 2030 may be coupled to the processor 2010 through an interface, or may be integrated with the processor 2010.

In some possible implementations, the apparatus 2000 may be disposed in the intelligent driving device 100 shown in FIG. 1. In an embodiment, the apparatus 2000 may be the computing platform 150 shown in FIG. 1. In another embodiment, the apparatus 2000 may be a processor or a chip of the computing platform.

It should be noted that the interface circuit 2020 may include but is not limited to a transceiver apparatus like an input/output interface (input/output interface), to implement communication between the apparatus 2000 and another device or a communication network.

The interface circuit 2020 may be configured to implement communication between the apparatus 2000 and another device or a communication network. For example, information collected by a sensor may be obtained through the interface circuit 2020, and an execution apparatus of the vehicle may be controlled to perform a corresponding operation.

An embodiment of this application further provides an intelligent driving device. The intelligent driving device includes the foregoing apparatus 1800 or the foregoing apparatus 2000.

In some possible implementations, the intelligent driving device may be a vehicle.

An embodiment of this application further provides a computer program product. The computer program product includes computer program code. When the computer program code is run on a computer, the computer is enabled to implement the methods in the foregoing embodiments of this application.

An embodiment of this application further provides a computer-readable storage medium. The computer-readable medium stores computer instructions. When the computer instructions are run on a computer, the computer is enabled to implement the methods in the foregoing embodiments of this application.

**EP 4 628 378 A1**

An embodiment of this application further provides a chip, including a circuit, configured to perform the methods in the foregoing embodiments of this application.

In an implementation process, steps in the foregoing methods may be implemented by using a hardware integrated logical circuit in a processor, or by using instructions in a form of software. The methods disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

Terms used in embodiments of this application are merely for the purpose of describing specific embodiments, but are not intended to limit this application. The terms "one", "a", and "this" of singular forms used in this specification and the appended claims of this application are also intended to include expressions such as "one or more", unless otherwise specified in the context clearly. It should be further understood that in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B each may be singular or plural. The character "/" generally indicates an "or" relationship between associated objects.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions to enable a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An auto parking method, comprising:

obtaining a first path remaining distance, wherein the first path remaining distance comprises a distance between an intelligent driving device and an end point of a planned parking path along the planned parking path; determining a first speed limit based on the first path remaining distance; determining a second speed limit based on first obstacle distance information, wherein the first obstacle distance information comprises a distance between the intelligent driving device and a surrounding obstacle; and determining a parking speed of the intelligent driving device based on the first speed limit and the second speed limit.

2. The method according to claim 1, wherein the determining a first speed limit based on the first path remaining distance comprises:

determining a path remaining distance between each path point in a plurality of path points of the planned parking path within the first path remaining distance and the end point of the planned parking path based on the plurality of path points; and
determining, based on the path remaining distance between each path point and the end point of the planned parking path, a first speed limit corresponding to each path point;
the determining a second speed limit based on first obstacle distance information comprises:

determining, based on obstacle distance information corresponding to each path point, a second speed limit corresponding to each path point; and
the determining a parking speed of the intelligent driving device based on the first speed limit and the second speed limit comprises:
determining a parking speed at each path point based on the first speed limit corresponding to each path point and the second speed limit corresponding to each path point.

3. The method according to claim 2, wherein the plurality of path points comprise a first path point and a second path point, the second path point is a path point within a pre-targeting distance from the first path point, and the determining, based on obstacle distance information corresponding to each path point, a second speed limit corresponding to each path point comprises:

determining an obstacle speed limit of the first path point based on an obstacle distance corresponding to the first path point;
determining an obstacle speed limit of the second path point based on an obstacle distance corresponding to the second path point; and
determining, based on the obstacle speed limit of the first path point and the obstacle speed limit of the second path point, a second speed limit corresponding to the first path point.

4. The method according to claim 3, wherein the determining, based on the obstacle speed limit of the first path point and the obstacle speed limit of the second path point, a second speed limit corresponding to the first path point comprises:
determining a smaller value between the obstacle speed limit of the first path point and the obstacle speed limit of the second path point as the second speed limit corresponding to the first path point.

5. The method according to any one of claims 2 to 4, wherein the planned parking path comprises a first path interval, a second path interval, and a third path interval within the first path remaining distance, the third path interval comprises a first intersection point of a first curve and a second curve, the first curve is a curve formed based on the first speed limit of each path point, the second curve is a curve formed based on the second speed limit of each path point, a difference between a path remaining distance of the third path interval and a path remaining distance of the first intersection point is less than or equal to a preset value, a path remaining distance of the first path interval is greater than the path remaining distance of the first intersection point, the first speed limit of the first path interval is greater than the second speed limit, a path remaining distance of the second path interval is less than the path remaining distance of the first intersection point, and the first speed limit of the second path interval is less than the second speed limit; and
the determining a parking speed at each path point based on the first speed limit corresponding to each path point and the second speed limit corresponding to each path point comprises:

determining third curves within the first path interval and the second path interval based on smallest values in the first curve and the second curve within the first path interval and the second path interval; and
when a time history of a speed limit of the first intersection point is greater than or equal to a first threshold, determining a third curve within the third path interval based on a smallest value in the first curve and the second curve within the third path interval; or

when a time history of a speed limit of the first intersection point is less than a first threshold, determining a third curve within the third path interval based on a second speed limit corresponding to a first dividing point and a first speed limit corresponding to a second dividing point, wherein the first dividing point is a dividing point between the first path interval and the third path interval, the second dividing point is a dividing point between the second path interval and the third path interval, and the third curve indicates the parking speed at each path point.

6. The method according to any one of claims 1 to 5, wherein the method further comprises:

determining a first reference speed based on the first path remaining distance and a current speed of the intelligent driving device; and

the determining a parking speed of the intelligent driving device based on the first speed limit and the second speed limit comprises:

determining the parking speed of the intelligent driving device based on the first speed limit, the second speed limit, and the first reference speed.

7. The method according to any one of claims 1 to 6, wherein the method further comprises:

determining an actual parking path of the intelligent driving device based on a movement state parameter of the intelligent driving device and the planned parking path; and

determining, based on the actual parking path, whether the intelligent driving device has a collision risk.

8. The method according to claim 7, wherein the method further comprises:

determining a braking distance when determining that the intelligent driving device has a collision risk; and controlling, based on the braking distance, the intelligent driving device to brake.

9. The method according to any one of claims 1 to 8, wherein the method further comprises:
determining the first path remaining distance based on the planned parking path and a projection of a first feature point of the intelligent driving device on the planned parking path, wherein the first feature point is used to construct an intelligent driving device coordinate system of the intelligent driving device.

10. The method according to any one of claims 1 to 9, wherein the method further comprises:

determining an obstacle on a side of the intelligent driving device; and

determining the first obstacle distance information based on the obstacle on the side of the intelligent driving device.

11. An auto parking apparatus, comprising:

an obtaining unit, configured to obtain a first path remaining distance, wherein the first path remaining distance comprises a distance between an intelligent driving device and an end point of a planned parking path along the planned parking path; and

a processing unit, configured to: determine a first speed limit based on the first path remaining distance; determine a second speed limit based on first obstacle distance information, wherein the first obstacle distance information comprises a distance between the intelligent driving device and a surrounding obstacle; and determine a parking speed of the intelligent driving device based on the first speed limit and the second speed limit.

12. The apparatus according to claim 11, wherein the processing unit is configured to:

determine a path remaining distance between each path point in a plurality of path points of the planned parking path within the first path remaining distance and the end point of the planned parking path based on the plurality of path points;

determine, based on the path remaining distance between each path point and the end point of the planned parking path, a first speed limit corresponding to each path point;

determine, based on obstacle distance information corresponding to each path point, a second speed limit corresponding to each path point; and

determine a parking speed at each path point based on the first speed limit corresponding to each path point and the second speed limit corresponding to each path point.

13. The apparatus according to claim 12, wherein the plurality of path points comprise a first path point and a second path point, the second path point is a path point within a pre-targeting distance from the first path point, and the processing unit is configured to:

determine an obstacle speed limit of the first path point based on an obstacle distance corresponding to the first path point;
determine an obstacle speed limit of the second path point based on an obstacle distance corresponding to the second path point; and
determine, based on the obstacle speed limit of the first path point and the obstacle speed limit of the second path point, a second speed limit corresponding to the first path point.

14. The apparatus according to claim 13, wherein the processing unit is configured to:
determine a smaller value between the obstacle speed limit of the first path point and the obstacle speed limit of the second path point as the second speed limit corresponding to the first path point.

15. The apparatus according to any one of claims 11 to 14, wherein the planned parking path comprises a first path interval, a second path interval, and a third path interval within the first path remaining distance, the third path interval comprises a first intersection point of a first curve and a second curve, the first curve is a curve formed based on the first speed limit of each path point, the second curve is a curve formed based on the second speed limit of each path point, a difference between a path remaining distance of the third path interval and a path remaining distance of the first intersection point is less than or equal to a preset value, a path remaining distance of the first path interval is greater than the path remaining distance of the first intersection point, the first speed limit of the first path interval is greater than the second speed limit, a path remaining distance of the second path interval is less than the path remaining distance of the first intersection point, the first speed limit of the second path interval is less than the second speed limit, and the processing unit is configured to:

determine third curves within the first path interval and the second path interval based on smallest values in the first curve and the second curve within the first path interval and the second path interval; and
when a time history of a speed limit of the first intersection point is greater than or equal to a first threshold, determine a third curve within the third path interval based on a smallest value in the first curve and the second curve within the third path interval; or
when a time history of a speed limit of the first intersection point is less than a first threshold, determine a third curve within the third path interval based on a second speed limit corresponding to a first dividing point and a first speed limit corresponding to a second dividing point, wherein the first dividing point is a dividing point between the first path interval and the third path interval, the second dividing point is a dividing point between the second path interval and the third path interval, and the third curve indicates the parking speed at each path point.

16. The apparatus according to any one of claims 11 to 15, wherein the processing unit is further configured to:

determine a first reference speed based on the first path remaining distance and a current speed of the intelligent driving device; and
the processing unit is configured to:
determine the parking speed of the intelligent driving device based on the first speed limit, the second speed limit, and the first reference speed.

17. The apparatus according to any one of claims 11 to 16, wherein the processing unit is further configured to:

determine an actual parking path of the intelligent driving device based on a movement state parameter of the intelligent driving device and the planned parking path; and
determine, based on the actual parking path, whether the intelligent driving device has a collision risk.

18. The apparatus according to claim 17, wherein the processing unit is further configured to:

determine a braking distance when determining that the intelligent driving device has a collision risk; and
control, based on the braking distance, the intelligent driving device to brake.

19. The apparatus according to any one of claims 11 to 18, wherein the processing unit is further configured to: determine the first path remaining distance based on the planned parking path and a projection of a first feature point of the intelligent driving device on the planned parking path, wherein the first feature point is used to construct an intelligent driving device coordinate system of the intelligent driving device.

20. The apparatus according to any one of claims 11 to 19, wherein the processing unit is further configured to:

determine an obstacle on a side of the intelligent driving device; and
determine the first obstacle distance information based on the obstacle on the side of the intelligent driving device.

21. An auto parking apparatus, comprising:

a memory, configured to store a computer program; and
a processor, configured to execute the computer program stored in the memory, for the apparatus to perform the method according to any one of claims 1 to 10.

22. An intelligent driving device, comprising the apparatus according to any one of claims 11 to 21.

23. A computer-readable storage medium, wherein the computer-readable storage medium stores a computer program, and when the computer program is executed by a computer, the method according to any one of claims 1 to 10 is implemented.

Intelligent driving device 100

Sensing system 120

Display apparatus 130

Computing platform 150

Processor 151

Processor 152

...

Processor 15n

FIG. 1

FIG. 2

FIG. 3

Sensing module 410

Decision-making module 420

Front-end module

Speed planning module

Functional safety module

Executor 430

FIG. 4

**500**

Obtain a first path remaining distance — S510

Determine a first speed limit based on the first path remaining distance — S520

Determine a second speed limit based on first obstacle distance information — S530

Determine a parking speed of an intelligent driving device based on the first speed limit and the second speed limit — S540

FIG. 5

FIG. 6

FIG. 7

FIG. 8

FIG. 9

FIG. 10

Initialize

Update a current point index — S1005

Whether a current point is a path start point — S1010 — Y

N

Whether a current obstacle-distance speed limit is greater than a historical obstacle-distance speed limit — S1015 — N

Y

Whether a distance between the current point and a pre-targeting start point is greater than a pre-targeting distance — S1020

N

Y

When a current speed limit time history is greater than a preset value, perform a storage operation and update a search start point, the pre-targeting start point, and the historical obstacle-distance speed limit — S1025

Whether the current obstacle-distance speed limit is less than the historical obstacle-distance speed limit — S1030 — N

Y

When a current speed limit time history is greater than a preset value, perform a storage operation and update a search start point, the pre-targeting start point, and the historical obstacle-distance speed limit — S1035

Update the pre-targeting start point — S1040

End — S1045

FIG. 11

FIG. 12

EP 4 628 378 A1

FIG. 13(a)

FIG. 13(b)

FIG. 13(c)

FIG. 13(d)

FIG. 14

EP 4 628 378 A1

FIG. 15

Initialize

S1505

Whether
k is less than a quantity
of speed curve
samples

N

Y    S1510

Determine a reference speed at a moment k based on a speed at the moment k, and determine a reference distance at the moment k based on a traveling distance increment at the moment k

S1515

Calculate a traveling distance increment at a moment k+1 based on the traveling distance increment at the moment k

S1520

Determine a parking remaining distance at the moment k+1 based on the traveling distance increment at the moment k+1, and determine a vehicle speed limit at the moment k+1

S1525

Use a smaller value between the vehicle speed limit at the moment k+1 and the reference speed at the moment k as a speed at the moment k+1

S1530

Determine a larger value between the speed at the moment k+1 and an output of a uniform deceleration model as a speed at the moment k+1

S1535

End

FIG. 16

FIG. 17

Parking apparatus 1800

Obtaining unit 1810

Processing unit 1820

FIG. 18

Parking apparatus 2000

Processor
2010

Memory
2030

Transceiver
2020

FIG. 19

## INTERNATIONAL SEARCH REPORT

International application No.

**PCT/CN2023/140469**

### A. CLASSIFICATION OF SUBJECT MATTER

B60W30/00(2006.01)i

According to International Patent Classification (IPC) or to both national classification and IPC

### B. FIELDS SEARCHED

Minimum documentation searched (classification system followed by classification symbols)

IPC:B60W

Documentation searched other than minimum documentation to the extent that such documents are included in the fields searched

Electronic data base consulted during the international search (name of data base and, where practicable, search terms used)

CNTXT, ENTXTC, VEN, CNKI: 华为, 张家旭, 王新宇, 张玉, 泊车, 停车, 障碍, 距离, park+, obstacle?, distance

### C. DOCUMENTS CONSIDERED TO BE RELEVANT

| Category* | Citation of document, with indication, where appropriate, of the relevant passages | Relevant to claim No. |
|---|---|---|
| X | CN 113200040 A (GUANGZHOU XIAOPENG AUTOPILOT TECHNOLOGY CO., LTD.) 03 August 2021 (2021-08-03) description, paragraphs 38-197, and figures 1-7 | 1-2, 6-12, 16-23 |
| Y | CN 113200040 A (GUANGZHOU XIAOPENG AUTOPILOT TECHNOLOGY CO., LTD.) 03 August 2021 (2021-08-03) description, paragraphs 38-197, and figures 1-7 | 3-4, 13-14 |
| Y | CN 113428137 A (ZHEJIANG GEELY HOLDING GROUP CO., LTD. et al.) 24 September 2021 (2021-09-24) description, paragraphs 108-130 | 3-4, 13-14 |
| A | CN 110347167 A (GUANGZHOU XIAOPENG MOTORS TECHNOLOGY CO., LTD.) 18 October 2019 (2019-10-18) entire document | 1-23 |
| A | CN 114889587 A (CHINA FAW CO., LTD.) 12 August 2022 (2022-08-12) entire document | 1-23 |
| A | WO 2019011522 A1 (RENAULT S.A.S) 17 January 2019 (2019-01-17) entire document | 1-23 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **07 February 2024** | **05 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/140469**

| Patent document cited in search report | | | Publication date (day/month/year) | Patent family member(s) | | | Publication date (day/month/year) |
|---|---|---|---|---|---|---|---|
| CN | 113200040 | A | 03 August 2021 | None | | | |
| CN | 113428137 | A | 24 September 2021 | None | | | |
| CN | 110347167 | A | 18 October 2019 | None | | | |
| CN | 114889587 | A | 12 August 2022 | None | | | |
| WO | 2019011522 | A1 | 17 January 2019 | EP | 3860901 | A1 | 11 August 2021 |
| | | | | FR | 3068943 | A1 | 18 January 2019 |
| | | | | FR | 3068943 | B1 | 28 August 2020 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211708549